# EUROPÄISCHE PATENTSCHRIFT

(11) **EP 4 263 753 B1**
(45) Veröffentlichungstag und Bekanntmachung des Hinweises auf die Patenterteilung: **09.10.2024**
(21) Anmeldenummer: 21840442.4
(22) Anmeldetag: 17.12.2021
(51) Int. Cl.: C09K 21/14, C08J 9/16, C08F 12/08, C08L 25/08, C08L 25/14, C08L 35/06, C08L 25/18, C08L 41/00, C08L 81/02, C08L 81/04

(54) **BRANDHINDERNDE COPOLYMERE UND FORMMASSEN**
FLAME-RETARDED COPOLYMERS AND MOLDING COMPOUNDS
COPOLYMÈRES IGNIFUGÉS ET COMPOSÉS DE MOULAGE

(30) Priorität: 17.12.2020 WO PCT/DE2020/101078
(43) Veröffentlichungstag der Anmeldung: 25.10.2023
(73) Patentinhaber: Hochschule Hamm-Lippstadt, Körperschaft des öffentlichen Rechts, 59063 Hamm (DE); Universität Siegen, Körperschaft des öffentlichen Rechts, 57072 Siegen (DE)
(72) Erfinder: FRANK, Petra, 57223 Kreuztal (DE); LUKSIN, Michael, 59556 Lippstadt (DE); FUCHS, Sabine, 33602 Bielefeld (DE); JONAS, Ulrich, 57250 Netphen (DE); ANDRUSCHKO, Mateusz Patryk, 59063 Hamm (DE)
(74) Vertreter: IPrime Bonnekamp Sparing Patentanwaltsgesellschaft mbH
(86) Internationale Anmeldenummer: PCT/DE2021/101017
(87) Internationale Veröffentlichungsnummer: WO 2022/128001

(56) Entgegenhaltungen:
- EP-A1- 0 509 304
- EP-B1- 0 509 304
- WO-A1-2021/121485
- WO-A2-2011/095540
- US-A- 5 811 470
- AHMED AZIZ ET AL: "Copolymerization of elemental sulfur with styrene", vol. 29, no. 4, 1 April 1984 (1984-04-01), US, pages 1225 - 1239, XP055789999, ISSN: 0021-8995, Retrieved from the Internet <URL:https://onlinelibrary.wiley.com/doi/pdfdirect/10.1002/app.1984.070290418> DOI: 10.1002/app.1984.070290418

## Beschreibung

Die vorliegende Erfindung betrifft brandhindernde Copolymere und Formstoffe und/oder -massen auf Styrolbasis mit reaktiv gebundenem Schwefel bei niedrigem Schwefelgehalt. In diesen Copolymeren und Formmassen sind auch Phosphorverbindungen kovalent angebunden. Die Copolymere und Formmassen zeichnen sich dadurch aus, dass sie im Wesentlichen farblos, geruchsfrei und auch frei von migrierenden Flammschutzadditiven sind. Zudem sind sie frei von potentiell cancerogenem Antimontrioxid (ATO). Die erfindungsgemäßen Copolymere und Formmassen zeigen eine sehr gut ausgeprägte intrinsische Flammwidrigkeit und können dadurch sowohl im Bereich Transport / Automotive, in der Bau- und in der Elektro- und Elektronikindustrie verwendet werden.

Die Ausrüstung von Styrolhomo- und -copolymeren mit Flammschutzadditiven ist für eine Vielzahl von Anwendungen von Bedeutung, beispielsweise für Polystyrol-Partikelschaumstoffe aus expandierbarem Polystyrol (EPS) oder Polystyrol-Extrusionsschaumstoffplatten (XPS) zum Isolieren von Gebäuden sowie für spritzgegossene Teile aus HIPS, ABS, ASA etc. zur Verwendung als Bauteile und Komponenten für Konsumgüter im Elektro- und Elektronikbereich.

Polymere, welche aus Styrolmonomeren aufgebaut sind, weisen eine Gesamtproduktionsmenge von ca. 10 Gew.% bezogen auf die gesamte weltweite Kunststoffproduktion auf und gehören somit zur viertgrößten Gruppe der weltweit zwanzig produzierten Kunststoffe. Homopolystyrol (PS) wird überwiegend als Verpackungsmaterial in Lebensmittelverpackungen und in Einweg-Gebrauchsartikeln verwendet. Zudem findet es als Partikelschaumstoff bzw. extrudierter Schaumstoff in Verpackungen und in der Wärmedämmung seine Anwendung.

Polystyrol als solches ist im Brandfall leicht entzündlich und weist keine flammhemmenden Eigenschaften auf. Tatsächlich brennen reine Polystyrolkörper unter den meisten Brandbedingungen komplett ab und besitzen keine flammhemmenden Eigenschaften. Zudem kommt es im Brandfall zu starker Ruß- und Rauchgasbildung. Nur durch Zusätze von geeigneten Flammschutzadditiven lässt sich eine flammhemmende Eigenschaft des Polymers erreichen. Aufgrund der großen Oberfläche sind in der Anwendung als Schaumstoff intumeszente und krustenbildende Flammschutzsysteme typischerweise nicht ausreichend wirksam. Dazu muss, wie in der WO 2006/082233 A1 beschrieben, auf gasphasenaktive Flammschutzmittel wie z. B. bromierte Flammschutzadditive mit hierzu passenden Synergisten (z. B. die thermischen Radikalbildner Dicumylperoxid, Di-tert-butylperoxid oder Dicumyl) zurückgegriffen werden. Halogenhaltige Flammschutzmittel sind dabei typischerweise persistent in der Umwelt und setzten im Brandfall korrosive Gase wie Chlor- oder Bromwasserstoff frei. Sind diese Flammschutzmittel auch noch niedermolekular, so sind diese beweglich im Kunststoff und neigen dazu, aus diesem zu migrieren und sich in der Umwelt und in Lebewesen anzureichern.

In der WO 2007/058736 A1 ist beschrieben, dass aufgrund seiner persistenten, bioakkumulativen und toxischen Eigenschaften, das in der Vergangenheit in Polystyrolschaumstoffen eingesetzte Hexabromcyclododekan, durch ein polymeres und polybromiertes Flammschutzmittel ersetzt werden kann. Eine weitere Alternative zu den bisher beschriebenen, flammgeschützten Polystyrolpolymeren ist das Blenden von Polystyrol mit anderen, weniger brennbaren Polymeren. So ist beispielsweise in der WO 2013/028344 A1 beschrieben, dass Polystyrol mit einem halogenierten Polyphenylenether (PPE) geblendet werden kann, um den notwendigen Flammschutz zu erhalten.

Um die mechanischen Eigenschaften von Styrolpolymeren einstellen zu können, kann Styrol mit unterschiedlichsten Comonomeren copolymerisiert werden. Die Produkte sind dann entsprechend der eingesetzten Comonomeren die Copolymere Poly(Acrylnitril-Butadien-Styrol) (ABS), Poly(Styrol-Butadien-Styrol) (SBS), Poly(Styrol-Acrylnitril) (SAN), Poly(Acrylnitril-Styrol-Acrylat) (ASA), Poly(StyrolButadien)kautschuk (SBR), High-Impact Polystyrol (HIPS), Polystyrolacrylate wie Polystyrolmethylacrylat (SMA) und Polystyrolmethylmethacrylat (SMMA), Methylacrylat-Butadien-Styrol-Copolymer (MBS), Methylmethacrylat-Acrylnitril-Butadien-Styrol-Polymerisate (MABS), Styrol-N-Phenyl-Maleinsäureimid-Copolymere (SPMI) und weitere.

In der Literatur werden schwefelhaltige Flammschutzadditive mit hohem Schwefelgehalt (> 30%) beschrieben, die als Flammschutzsynergisten für phosphorhaltige Flammschutzmittel in Polystyrolschaumstoffen eingesetzt werden. Dies ist beispielsweise in den Druckschriften WO 2011/121001 A1 oder WO 2012/089667 A1 der Fall. Diese hochschwefelhaltigen Verbindungen zeichnen sich aber typischerweise durch einen intensiven Geruch und durch eine kräftige, gelbe bis rotbraune Farbe aus, welches den Einsatz in vielen, insbesondere ungefärbten Kunststoffanwendungen einschränkt bzw. unmöglich macht. Weiterhin erreichen die beschriebenen Flammschutzadditive keinen ausreichenden Flammschutzeffekt in Polystyrol-Schaumstoffen, wenn diese allein und ohne weitere Flammschutzmittel eingesetzt werden. Auch wird in den Veröffentlichungen lediglich der Einsatz als Zusatzstoff (Additiv) beschrieben, die Brennbarkeit der reinen Materialien wird nicht erwähnt.

Elementarer Schwefel als additiver Flammschutzmittelzusatzstoff in Homopolystyrol wird ebenfalls in der WO 2011/095540 A2 beschrieben, welcher seine Wirksamkeit allerdings nur in Kombination mit einem phosphorhaltigen Flammschutzmittel erreicht. Einzeln bleibt der Schwefel in Form eines beigemischten Flammschutzadditivs in Polystyrolschaumstoffen in Hinblick auf den Flammschutz nahezu wirkungslos. Weiterhin führt der Zusatz von elementarem Schwefel im finalen Produkt immer zu einer typischerweise stark ausgeprägten Gelbfärbung, welche in vielen Anwendungen unerwünscht ist. Ebenfalls führt der elementare Schwefel im Prozess der Polymerverarbeitung und im Endprodukt dazu, dass mehr oder weniger ausgeprägte Schwefelgerüche entstehen.

In der WO 2017/004186 A1 ist erstmalig die flammhemmende Wirkung von hochschwefelhaltigen Duromeren beschrieben. Diese sollen zum einen als Additiv in Polyurethanschäumen, zum anderen auch als duromerer Werkstoff eingesetzt werden können. Diese Schwefelcopolymere weisen jedoch einen hohen Schwefelgehalt von mindestens 40 Gew.% auf. Aufgrund des hohen Schwefelgehalts und des damit einhergehenden unangenehmen Geruchs, den hochschwefelhaltige Materialien aufgrund ihrer zumindest teilweise sulfidischen Struktur typischerweise absondern, ist die Verwendung dieser Duromere in vielen Kunststoffanwendungen stark eingeschränkt.

Desweiteren können duromere Werkstoffe in den typischen Anwendungen für geschäumtes Polystyrol nicht eingesetzt werden, da deren Aufschäumbarkeit entweder gänzlich unmöglich oder zumindest sehr stark eingeschränkt ist. Die Funktionsweise in der WO 2017/004186 A1 beschriebenen Materials basiert auf der Ausbildung einer stabilen Kruste sowie auf Intumeszenz (Aufschäumen und Verkleben). Bei Materialien wie geschäumten Polymeren, welche sich durch eine sehr große Oberfläche im Verhältnis zur Masse auszeichnen, bieten solche Mechanismen im Flammschutz keinen ausreichenden Schutz, um normierte Brandprüfungen zu bestehen. Testergebnisse bezüglich des Brandverhaltens dieser Polymere fehlen so auch in der WO 2017/004186 A1.

Ferner beschreibt die Veröffentlichung von Ahmed Aziz et al.: "Copolymerisation of elemental sulfur with styrene", in Journal of Applied Polymer Science, Bd. 29, Nr.4, vom 01. April 1984, Seiten 1225-1239 die Herstellung von Copolymeren ausgehend von den Monomeren Styrol und Schwefel, wobei der Massenanteil von Schwefel bei unter 40% liegt.

Auch ist in der EP 0509304 A1 in den Ausführungsbeispielen die Herstellung von Copolymeren ausgehend von phosphat- und triazinhaltigen Monomeren beschrieben, in denen jedoch kein Schwefel enthalten ist.

Die WO 2011/095540 A2 beschreibt brandhindernde Formmassen und Verfahren zu deren Herstellung und deren Verwendung.

Schließlich sind in der WO 2011/121485 A1 schwefelhaltige Copolymere beschrieben, die im Gegensatz zu den vorliegenden Copolymeren aus anderen Monomereinheiten aufgebaut sind und andere Teilstrukturen umfassen, die nachveröffentlicht worden sind.

Aufgabe der hier vorliegenden Erfindung ist es daher Copolymere und/oder Formstoffe beispielsweise als Halbzeuge oder als Bestandteil von Verkleidungen, Dämmstoffe zu generieren, die eine flammhemmende oder brandhindernde Eigenschaft in Kombination mit kovalent gebunden, organisch-phosphorhaltigen Comonomeren und einem geringen Gehalt an kovalent gebundenem Schwefel aufweisen, ohne dass weitere Flammschutzadditive zwingend zugemischt werden müssen, um einen ausreichenden brandhemmenden Effekt zu erreichen.

Diese Aufgabe wird erfindungsgemäß durch die Merkmale der unabhängigen Ansprüche 1 und 5 gelöst.

Die erfindungsgemäßen Copolymere weisen durch die kovalente Anbindung der flammschutzaktiven Gruppen keinerlei Auswaschung, keinen Geruch, keine Eigenfarbe und gleichzeitig sehr gute intrinsische Flammschutzeigenschaften auf. Sie sind weiterhin frei von - potentiell - krebserregendem Antimontrioxid und mittels kommerziell erhältlicher Ausgangsmaterialien kostengünstig herzustellen.

Durch die Copolymerisation von Styrol und seinen Derivaten mit zusätzlichen phosphorhaltigen Monomeren wurden in Gegenwart von geringen Mengen an Schwefel neuartige, thermoplastische Copolymere und/oder Formmassen gefunden. Diese Copolymere und/oder Formstoffe oder -massen weisen neben dem kovalent gebundenen Phosphor zusätzlich noch einen äußerst geringen Anteil an gebundenem Schwefel bei gleichzeitig intrinsisch-flammhemmenden Eigenschaften auf.

Bei der Darstellung der vorliegenden Copolymeren ist von einer zufälligen Verteilung der Wiederholungseinheiten aus den verwendeten Monomeren auszugehen. Die bei einer normalen Polymerkette angegebene Anzahl von Wiederholungseinheiten "n" ist in diesem Fall nur bedingt anwendbar, da die Monomereinheiten innerhalb der Polymerkette nicht einer regelmäßigen Abfolge wiederholt folgen. Aus diesem Grund wurde auf die Angabe einer Wiederholungseinheit "n" in den nachfolgenden Formeln 1 - 24 verzichtet. Im vorliegenden Fall wäre es deshalb auch möglich in den nachfolgenden Formeln Wiederholungseinheiten zu definieren, die im Bereich von n = 2 -100.000 liegen können. Mit den eckigen Klammern ist dennoch eine wiederholende Abfolge der in Frage kommenden Wiederholungseinheiten entsprechend der üblichen Polymerkettendarstellung nach dem Stand der Technik angedeutet. Es könnte daher die Angabe "n" an den eckigen Klammern in den nachfolgenden Formeln (1) bis (24) angegeben werden, auf die jedoch aus den vorher genannten Gründen verzichtet wurde. Die Darstellung der Copolymerzusammensetzung aus unterschiedlichen Monomeren mit " / " ist entsprechend der Empfehlung nach IUPAC gewählt.

Die erfindungsgemäß nach Formel (6) bis (15) und (17) bis (24) gebildeten Copolymere und/oder aus ihnen gebildete Formmassen sind flammhemmend und/oder selbstverlöschend und im Wesentlichen farb- und/oder geruchlos. Unter im Wesentlichen farblos ist dabei im Sinne der Anmeldung die Abwesenheit von sichtbaren Einfärbungen zu verstehen. Diese entsprechen den wahrgenommenen RAL-Farbtypen, beispielhaft aber nicht abschließend aufgezählt, RAL 1013 Perlweiß, 10 RAL 9001 Cremeweiß, RAL 9003 Signalweiß, RAL 9010 Reinweiß und/oder RAL 9016 Verkehrsweiß.

Unter geruchlos in Bezug auf die Copolymere und Formmassen kann die olfaktorische Wahrnehmung von sulfidischen Verbindungen von weniger als 50 µg/m³ Luft, beziehungsweise weniger als 5 µg/m³ Luft (beispielsweise Schwefelwasserstoff, Dimethylsulfid, Methylmercaptan), oder auch weniger als 0,5 µg/m³ (beispielsweise Thiophenol, Thiokresol, Diphenylsulfid, Propylmercaptan, Ethylmercaptan, Crotylmercaptan, Amylmercaptan, Benzylmercaptan, Amylmercaptan, Allylmercaptan) Luft verstanden werden, wobei die sulfidischen Verbindungen in Abhängigkeit ihrer chemischen Struktur eine unterschiedliche Geruchsschwelle aufweisen und individuell unterschiedlich wahrgenommen werden können.

Weiterhin zeichnen sich die intrinsisch flammgehemmten Copolymere dadurch aus, dass die phosphor- oder schwefelhaltigen Gruppen kovalent an das Copolymer angebunden sind und nicht aus diesem migrieren können.

Ein erfindungsgemäß aus den Formeln (6) bis (15) und (17) bis (24) gebildetes Copolymer kann einen Einzelbestandteil einer Formmasse bilden oder Mitbestandteil einer Formmasse sein. Definitionsgemäß sollen unter dem Begriff Formmasse copolymerhaltige Werkstücke verstanden werden, die einen Formstoff für die Herstellung von Formkörpern bzw. Halbzeugen oder Fertigteilen bilden. Durch mechanische Krafteinwirkung und/oder erhöhte Temperatur ≤ 250°C wird durch eine Verarbeitungsmethode wie Extrudieren, Pressen, Spritzpressen oder Spritzgießen in Werkzeugen und nachfolgender Abkühlung die Formmasse zu Halbzeugen oder Fertigteilen verarbeitet.

Als Halbzeug wird im Rahmen der Anmeldung ein vorgefertigtes Rohmaterial oder Werkstoff oder Halbfabrikat der einfachsten Form angesehen, das in der Regel aus einem einzelnen Material oder einer einzelnen Verbindung wie einem einzelnen erfindungsgemäßen Copolymer bestehen kann, aber nicht nur aus einem einzelnen Material oder einer einzelnen Verbindung wie einem einzelnen erfindungsgemäßen Copolymer bestehen muss. So ist es möglich, dass zumindest ein erfindungsgemäßes Copolymer mit mindestens einem weiteren Copolymer und/oder einem weiteren Polymer und/oder einem anderen Werkstoff wie beispielsweise Metall (Bsp. Aluminium und/oder Eisen) und/oder Kunststoff (Bsp. Polyurethan und/oder Polycarbonat) und/oder Keramiken (Bsp. Kaolin und/oder Silikate und/oder Tonmaterialien) und/oder Prepregs, BMC oder SMC zusammen ein Werkstück oder Halbzeug bildet. D.h. die Formmasse oder der -stoff kann aus einem erfindungsgemäßen Copolymer und/oder zumindest einem weiteren Polymer und/oder aus einem zusätzlichen erfindungsgemäßen Copolymer bestehen. Die Formmasse, der Formstoff oder der Formkörper kann auch ein erfindungsgemäßes Copolymer und/oder ein weiteres Polymer und/oder ein zusätzliches erfindungsgemäßes Copolymer und/oder einen anderen Werkstoff wie beispielsweise Metall (Bsp. Aluminium und/oder Eisen) oder Kunststoff (Bsp. Polyurethan und/oder Polycarbonat) oder Keramik (Kaolin und/oder Silikate und/oder Tonmaterialien) zusammen für ein Halbzeug umfassen. Es dabei auch möglich, dass die Formmasse, der Formstoff oder der Formkörper den Werkstoff oder das Werkstück als Beschichtung teilweise oder vollumfänglich umgibt oder der Werkstoff oder das Werkstück in die Formmasse, den Formstoff oder den Formkörper eingebettet ist.

Als Halbzeuge werden beispielsweise einfache Profile Konstruktionsprofile, Stangen, Rohre und Platten bezeichnet. Formstoffe, die bereits in einem vorbereitenden Fertigungsschritt eine individuelle Form erhalten haben, aber noch für weitere Fertigungsschritte vorgesehen sind, werden in einem zweiten Schritt beispielsweise durch Umformung im nächsten Schritt entweder zu einem Fertigteil oder zunächst zu einem weiteren Halbzeug oder -fabrikat weiterverarbeitet.

So entstehen aus den Halbzeugen Fertig-Bauteile, Fertig-Bauelemente (z. B. Konstruktionsprofile, Ziegel oder Dämmstoffe) oder Fertig-Bausteine.

Die Material- und Oberflächenqualitäten sind oft für bestimmte Einsatzzwecke und Fertigungsverfahren optimiert. Beispielhaft, aber nicht abschließend benannt, können die Copolymere, die erfindungsgemäß aus den Formeln (6) bis (15) und (17) bis (24) gebildet werden, Einzelbestandteil oder Mitbestandteil einer Formmasse oder eines Formstoffes sein, die als Halbzeuge Verwendung beispielweise in der Bauindustrie als Dämmstoffe Verwendung finden. Die Formmasse oder der Formstoff kann insofern ein einzelnes Copolymer oder auch weitere Polymere und/oder Copolymere und/oder Zuschläge und/oder Additive enthalten, die sich in ihrer Eigenschaft an der gewünschten Verwendung wie beispielsweise im Haus- oder Anlagenbau oder im Automobilbau orientieren. So ist es möglich, dass die Formstoffe oder -massen zusätzlich weitere Zuschläge wie Flammschutzmittel wie Melamin, Melaminpolyphosphat, Melamincyanurat, Metalloxide, Metallhydroxide, Cyclotriphosphazene, Phosphate, Phosphinate, Phosphinoxide, Hyphosphosphite oder Blähgraphit enthalten. Geeignete Zuschläge wären beispielsweise zusätzliche halogenfreie Flammschutzmittel wie Aflammit PCO 900, Exolit OP 930, Exolit OP 1312, DOPO, HCA-HQ, Cyagard RF-1241, 20 Cyagard RF-1243, Fyrol PMP, Phoslite B85AX, Melapur 200, Melapur MC und Budit 669 erhältlich.

Auch sind in diesem Zusammenhang als Zuschläge Verbindungen wie 2,4,8,10-Tetraoxa-3,9-diphosphaspiro [5.5] undecane-3,9-dimethyl-3,9-dioxide (0,1 - 10 Gew.%) oder Hexakisphenoxycyclotriphosphazen (0,5 - 20 Gew.%) zu nennen.

Im Rahmen der vorliegenden Erfindung weisen die brandhindernden und/oder selbstverlöschenden Copolymere oder die Formmassen oder Formstoffe bzw. Halbzeug eine optional geruchsneutrale und/oder farbneutrale Ausgestaltung auf.

Ein Copolymer oder ein aus einer Formmasse gebildeter Formstoff wirkt bei Kontakt mit einer Flamme zumindest flammhemmend bzw. brandhindernd oder auch in Abhängigkeit von den Substituenten selbstverlöschend. Die erfindungsgemäßen Copolymere und/oder Formmassen sind frei von Antimontrioxid und können frei von halogenhaltigen Bestandteilen erhalten werden.

Es wurden Copolymere oder Formstoffe umfassende Verbindungen mit einer zufälligen Monomerverteilung der Formel (6) bis (15) und (17) bis (24) gefunden mit einer statistischen Monomerverteilung von Monomereinheiten mit dem Massenanteil ω mit ω(Sty), ω(S). Die Summe der Massenanteile ω(Sty) und ω(3) beträgt 1.

Ferner wurden erfrindungsgemäß Copolymere umfassende Verbindungen mit einer zufälligen Monomerverteilung der Formel (6) bis (15) und (17) bis (24) gefunden mit einer statistischen Monomerverteilung von Monomereinheiten mit dem Massenanteil ω mit ω(Sty), ω(P) und ω(3) bei denen ω(3) und ω(P) dem Massenanteil der schwefelhaltigen und potenziell, phosphorhaltigen Repetiereinheit entspricht. Die Summe der Massenanteile in einem Copolymeren mit den Formeln (6) bis (24) sind jeweils Monomereinheiten mit den Massenanteilen ω mit ω(Sty), ω(P) und ω(3) = 1.

Für nachfolgenden Verbindungen der Formeln (6) gilt das vorhergehend bereits genannte. Bei den hier dargestellten Strukturformeln der Copolymere wurde auch auf die Angabe des Indizes "n" an der eckigen Klammer aus den zuvor beschriebenen Gründen verzichtet. Im vorliegenden Fall wäre es deshalb auch möglich in den nachfolgenden Formeln Wiederholungseinheiten zu definieren, die im Bereich von n = 3 bis 100.000 liegen können, wobei durch die zufällige Monomerverteilung eine Angabe von "n" in den Wiederholungseinheiten in den Formeln (6) bis (24) verzichtet wurde.

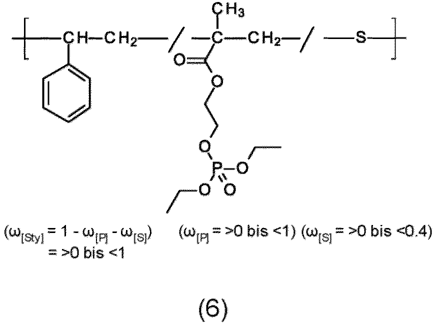

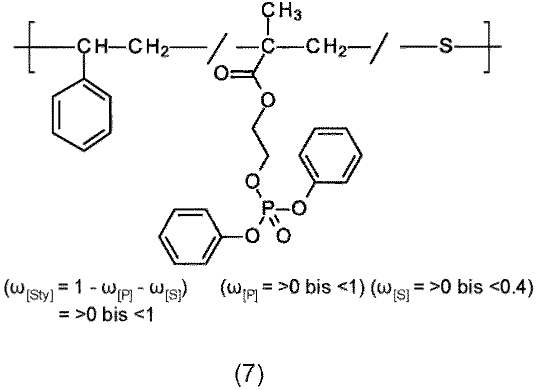

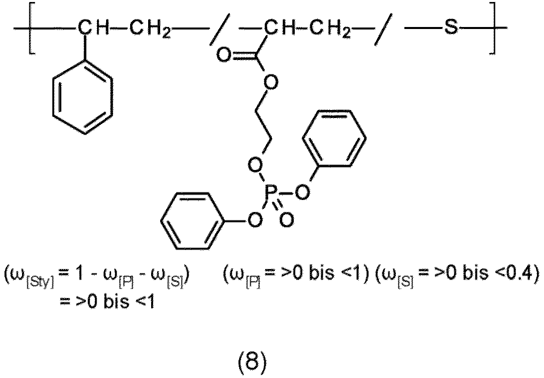

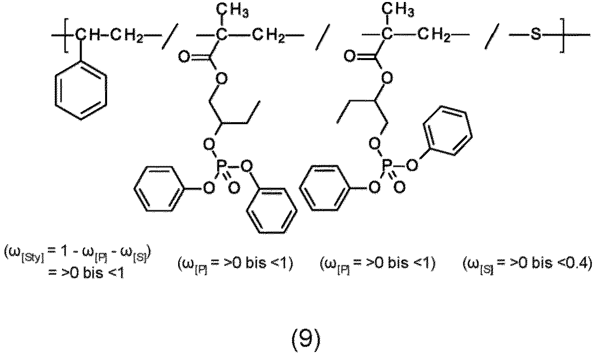

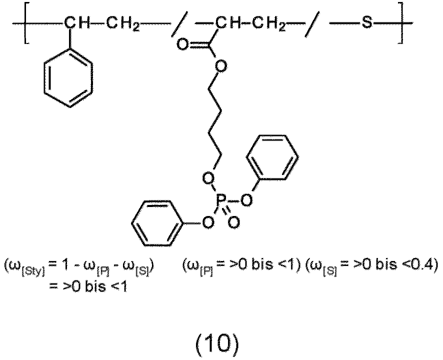

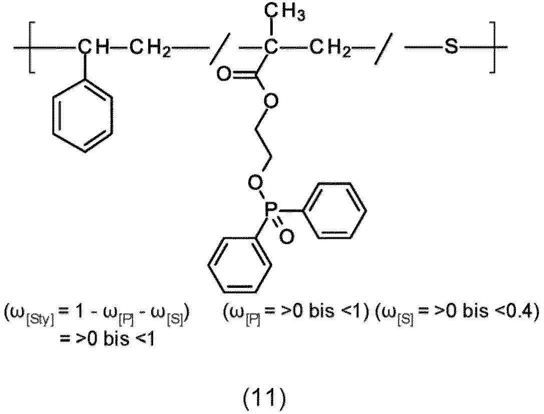

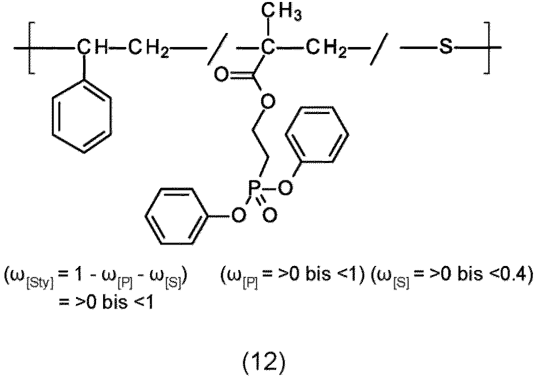

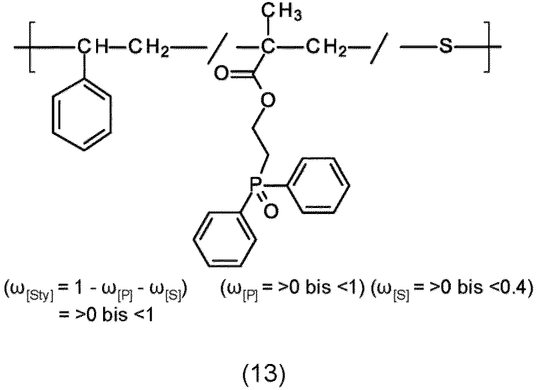

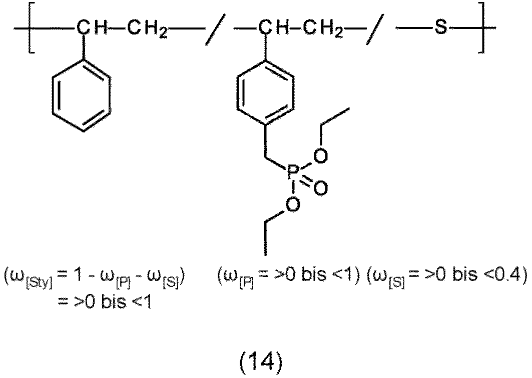

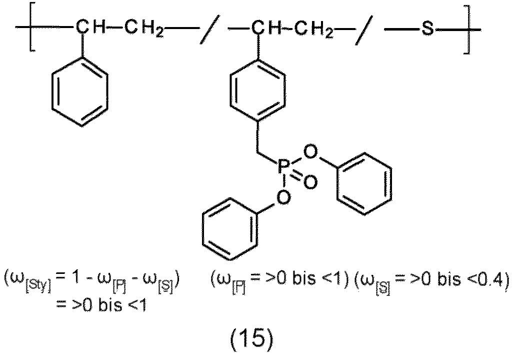

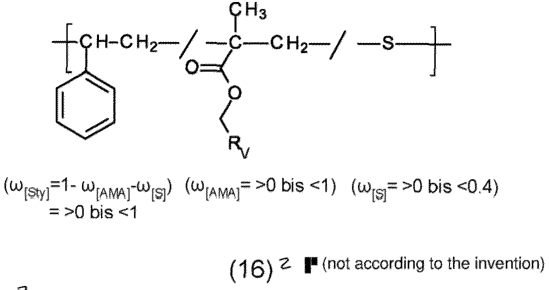

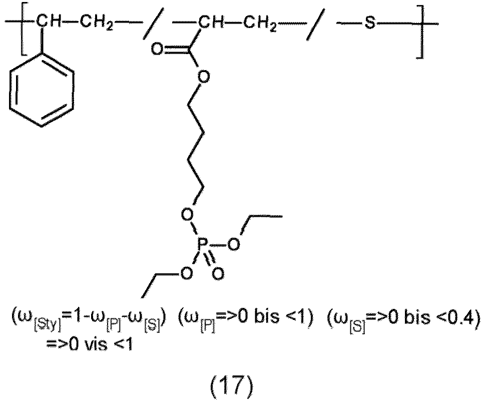

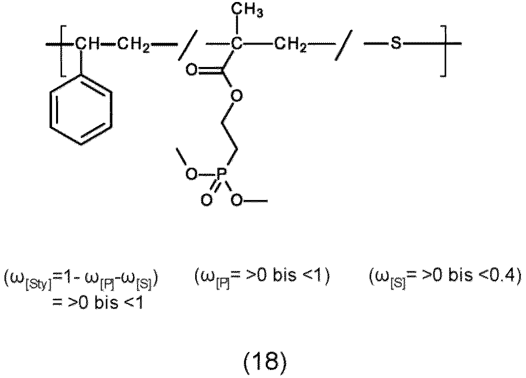

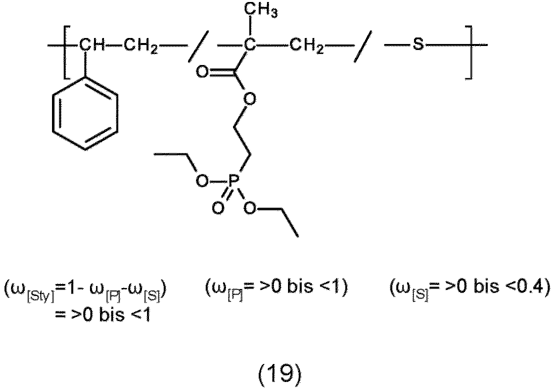

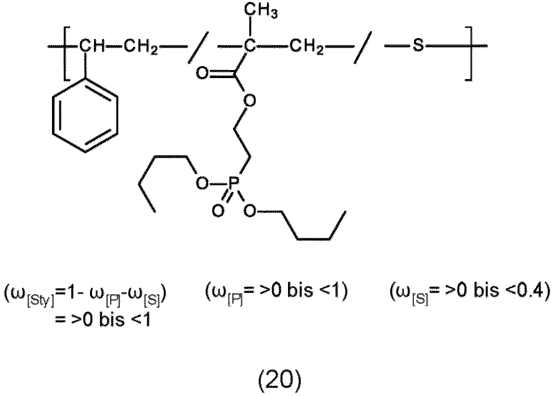

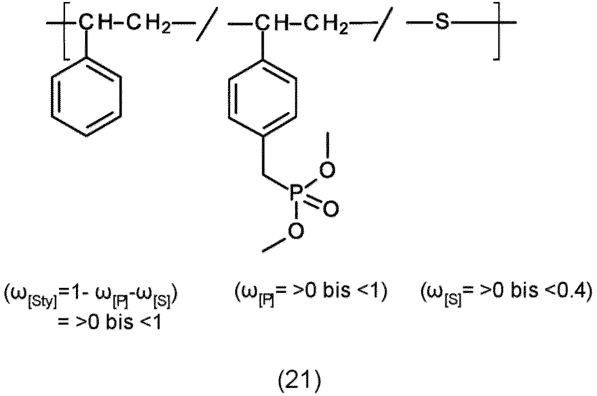

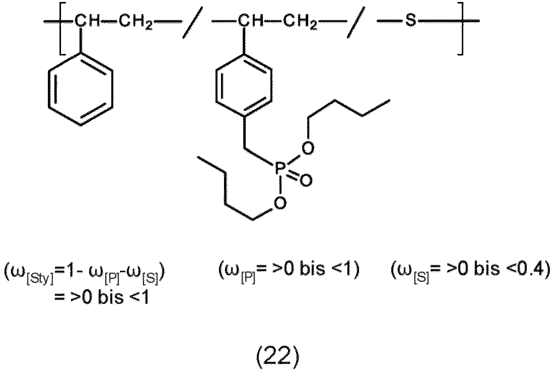

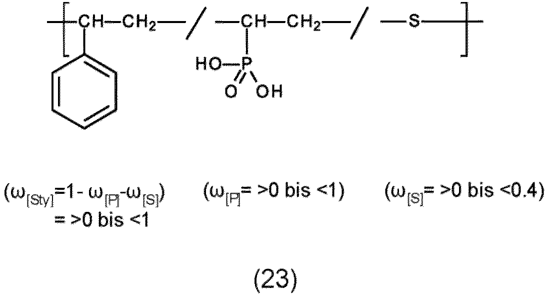

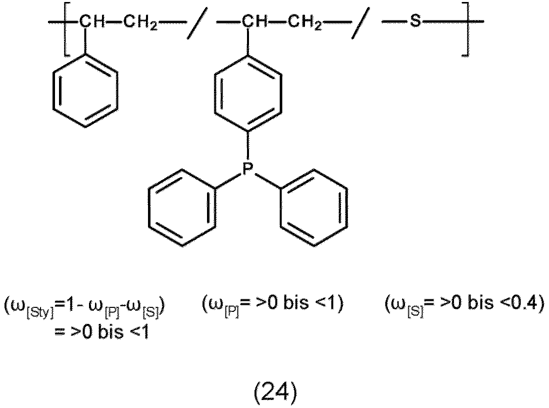

Die erfindungsgemäßen Copolymere sind als Einzelverbindung oder als Bestandteil von Formstoffen oder -massen bereits flammhemmend und/oder selbstverlöschend. Unter flammhemmend ist zu verstehen, dass nach einer initialen Entzündung ein Copolymer oder ein copolymerumfassender Formstoff oder Formmasse im Vergleich zu Homostyrol kürzere Nachbrennzeiten aufweist. Selbstverlöschend bedeutet, dass ein entzündetes Copolymer oder ein Formstoff oder eine Formmasse innerhalb von fünf Sekunden erlischt, nachdem eine Brennerflamme vom Copolymer oder dem Formstoff oder der Formmasse entfernt wird. Diese Formmassen können durch physikalische Abmischung (Blending) mit anderen Polymeren und Copolymeren in beliebigen Mengenverhältnissen erhalten werden.

Die erfindungsgemäßen Copolymere und Formstoffe oder -massen weisen keine halogenhaltigen Substituenten auf und sind insofern halogenfrei, was eine Umweltverträglichkeit sowohl bei der Herstellung, der Verwendung und auch bei der Entsorgung sowie im Brandfall bedeutet.

Ferner wurden brandhindernde Formstoffe oder -massen für die Extrusion (oder zum Pressen, Gießen oder Schäumen) gefunden, die zumindest ein brandhinderndes Copolymer mit einem Schwefelanteil von weniger als 5 % aufweisen.

Bedingt durch die thermoplastischen Eigenschaften der Copolymere und/oder Formmassen kann durch unterschiedlichste Formgebung eine Vielzahl von Anwendungen bedient werden. Da auch Schaumkörper als Formstoff aus den Copolymeren und/oder Formmassen hergestellt werden können, können diese ihren Einsatz beispielhaft als Wärmeisolationsmaterialien finden.

Die aus den brandhindernden Copolymeren hergestellten Schaumstoffe weisen bevorzugt eine Dichte im Bereich von 5 bis 200 kg/m³, besonders bevorzugt im Bereich von 10 bis 100 kg/m³ auf und sind bevorzugt zu mehr als 80%, besonders bevorzugt von 95 bis 100% in den Schaumstoffen vorhanden.

Bevorzugt besteht die Polymermatrix der brandhindernden Copolymere, Copolymerschaumstoffe oder Formstoffe aus thermoplastischen (Co)Polymeren oder Polymermischungen, insbesondere Styrol(co)polymeren. Die erfindungsgemäßen, brandhindernden und expandierbaren Styrol(co)polymere (EPS) und Styrol(co)polymerextrusionschaumstoffe (XPS) können durch Einmischen eines Treibmittels in Form eines niedrig siedenden organischen Lösungsmittels wie beispielsweise n-Hexan oder Pentan in die Polymerschmelze und anschließender Extrusion und Granulierung unter Druck zu expandierbaren Granulaten (EPS) oder durch Extrusion und Entspannung unter Verwendung entsprechend geformter Düsen zu Schaumstoffplatten (XPS) oder Schaumstoffsträngen verarbeitet werden.

Unter expandierbaren Styrol(co)polymerisaten (EPS) werden treibmittelhaltige Styrol(co)polymerisate verstanden. Die EPS-Partikelgröße liegt bevorzugt im Bereich von 0,2 - 2 mm. Styrol(co)polymer-Partikelschaumstoffe sind durch Vorschäumen und Versintern der entsprechenden, expandierbaren Styrol(co)polymeren (EPS) erhältlich. Die Styrol(co)polymer-Partikelschaumstoffe weisen bevorzugt 2 bis 15 Zellen pro Millimeter auf. Den erfindungsgemäßen Copolymeren oder den erfindungsgemäßen copolymerenthaltenden Formmassen können noch ein weiteres Polymer, insbesondere ein Styrolpolymer beigemischt werden, z. B. Homopolystyrol, glasklares Polystyrol (GPPS), Schlagzähpolystyrol (HIPS), Styrol-Methylstyrolcopolymere, Acrylnitril-Butadien-Styrolpolymerisate (ABS), Poly(Styrol-Butadien-Styrol) (SBS), Styrol-Acrylnitril-Polymer (SAN), Poly(Styrolbutadien)kautschuk (SBR), Poly-(Acrylnitril-Styrol-Acrylester) (ASA), Polystyrolacrylate wie Polystyrolmethylacrylat (SMA) und Polystyrolmethylmethacrylat (SMMA), Methylacrylat-Butadien-Styrol-Copolymer (MBS), Methylmethacrylat-Acrylnitril-Butadien-Styrol-Polymerisate (MABS), Styrol-N-Phenylmaleinsäureimid-Copolymere (SPMI) oder Mischungen davon oder Mischungen der genannten Styrol(co)polymere mit Polyolefinen wie Polyethylen oder Polypropylen und Polyphenylenether (PPE).

Weiterhin ist unter einem weiteren Polymer auch ein Copolymer aus Styrol und/oder phosphorhaltigen Co-Monomeren zu verstehen, beispielsweise Copolymere aus Styrol mit mindestens einem der Monomere der Forme (25) bis (38).

Die beschriebenen Formmassen sind im Wesentlichen farb- und/oder geruchlos.

Unter "im Wesentlichen farblos" ist dabei im Sinne der Anmeldung die Abwesenheit von sichtbaren Einfärbungen zu verstehen. Diese entsprechen den wahrgenommenen RAL-Farbtypen, beispielhaft aber nicht abschließend aufgezählt, RAL 1013 Perlweiß, RAL 9001 Cremeweiß, RAL 9003 Signalweiß, RAL 9010 Reinweiß und/oder RAL 9016 Verkehrsweiß.

Unter geruchlos kann die olfaktorische Wahrnehmung von sulfidischen Verbindungen von weniger als 50 µg/m³ Luft, bevorzugt weniger als 5 µg/m³ Luft (beispielsweise Schwefelwasserstoff, Dimethylsulfid, Methylmercaptan), besonders bevorzugt weniger als 0,5 µg/m³ (beispielsweise Thiophenol, Thiokresol, Diphenylsulfid, Propylmercaptan, Ethylmercaptan, Crotylmercaptan, Amylmercaptan, Benzylmercaptan, Amylmercaptan, Allylmercaptan) Luft verstanden werden, wobei die sulfidischen Verbindungen in Abhängigkeit ihrer chemischen Struktur eine unterschiedliche Geruchsschwelle aufweisen und typischerweise persönlich individuell wahrgenommen werden können.

Die erfindungsgemäßen Styrol(co)polymere können zur Verbesserung der mechanischen Eigenschaften oder der Temperaturbeständigkeit gegebenenfalls unter Verwendung von Verträglichkeitsvermittlern mit einem weiteren Polymer als thermoplastisches Polymer wie Homopolystyrol (PS), Polyamiden (PA), Polyolefinen wie Polypropylen (PP) oder Polyethylen (PE), Polyacrylaten wie Polymethylmethacrylat (PMMA), Polycarbonat (PC), Polyestern wie Polyethylenterephthalat (PET) oder Polybutylenterephthalat (PBT), Polyethersulfonen (PES), Polyetherketonen oder Polyethersulfiden (PES) versetzt werden. Des Weiteren sind Mischungen mit weiteren Polymeren in den genannten Mengenbereichen auch mit z. B. hydrophob modifizierten oder funktionalisierten Polymeren oder Oligomeren, Kautschuken wie Polyacrylaten oder Polydienen wie z.B. Styrol-Butadien-Blockcopolymeren oder biologisch abbaubaren, aliphatischen oder aliphatisch/aromatischen Copolyestern möglich.

Als Verträglichkeitsvermittler eignen sich z. B. mit Maleinsäureanhydrid-modifizierte Styrolcopolymere, epoxidgruppenhaltige Polymere oder Organosilane.

Den Styrolcopolymeren können im Herstellungsverfahren auch Polymerrezyklate der genannten thermoplastischen Polymere, insbesondere Styrol(co)polymere und expandierbare Styrol(co)polymere (EPS) in Mengen von maximal 50 Gew.%, insbesondere in Mengen von 1 bis 20 Gew.% zugemischt werden, ohne dass die flammhemmenden oder selbstverlöschenden Eigenschaften der Copolymere und/oder Formmassen wesentlich verändert werden.

Für hochtemperaturbeständige Copolymere und/oder Formstoffe und/oder Schaumstoffe werden bevorzugt Mischungen aus SMA und SAN bzw. SAN und SPMI eingesetzt. Der Anteil wird entsprechend der gewünschten Wärmeformbeständigkeit gewählt. Der Acrylnitrilgehalt in SAN beträgt bevorzugt 25 bis 33 Gew.%. Der Methacrylat-Anteil in SMA beträgt bevorzugt 25 bis 30 Gew.%.

Die Styrol(co)polymerisate oder Formstoffe können Hilfsmittel und Zuschläge enthalten, beispielsweise Flammschutzmittel, Füllstoffe, Keimbildner, UV-Stabilisatoren, Kettenüberträger, Treibmittel, Weichmacher, Antioxidantien, lösliche und unlösliche anorganische und/oder organische Farbstoffe und Pigmente, z. B. Infrarot (IR)-Absorberwie Ruß, Graphit oder Aluminiumpulver. In der Regel werden die Farbstoffe und Pigmente in Mengen im Bereich von 0,01 bis 30 Gew.%, bevorzugt im Bereich von 1 bis 5 Gew.% zugesetzt. Zur homogenen und mikrodispersen Verteilung der Pigmente in dem Styrolcopolymer kann es insbesondere bei polaren Pigmenten zweckmäßig sein, ein Dispergierhilfsmittel wie z. B. Organosilane, epoxygruppenhaltige Polymere oder mit Maleinsäureanhydrid gepfropfte Styrolpolymere einzusetzen. Bevorzugte Weichmacher sind Mineralöle und Phthalate, die in Mengen von 0,05 bis 10 Gew.% bezogen auf das Styrol(co)polymerisat eingesetzt werden können.

Die Menge der eingesetzten IR-Absorber richtet sich nach deren Art und Wirkung. Die Styrol(co)polymer-Partikelschaumstoffe enthalten bevorzugt 0,5 bis 5 Gew.%, besonders bevorzugt 1 bis 4 Gew.% IR-Absorber. Bevorzugt werden als IR-Absorber Graphit, Ruß oder Aluminium mit einer mittleren Teilchengröße im Bereich von 1 bis 50 µm verwendet.

Der bevorzugt eingesetzte Graphit hat eine mittlere Partikelgröße von 1 bis 50 µm, insbesondere von 2,5 µm bis 12 µm, ein Schüttgewicht von 100 bis 500 kg/m³ und eine spezifische Oberfläche von 5 bis 20 m²/g. Es kann Naturgraphit oder gemahlener, synthetischer Graphit eingesetzt werden. Die Graphitpartikel sind im Styrol(co)polymerisat vorzugsweise in Mengen von 0,05 bis 8 Gew.%, insbesondere von 0,1 bis 5 Gew.% enthalten.

Die Herstellung der besonders bevorzugten, expandierbaren Styrol(co)polymerisate (EPS) oder Formstoffe kann nach unterschiedlichen Verfahren erfolgen.

Bei einer Ausführungsform vermischt man athermane Partikel und ein nichtionisches Tensid mit einer Schmelze des Styrol(co)polymerisats oder Formstoffs, vorzugsweise in einem Extruder. Dabei wird gleichzeitig das Treibmittel in die Schmelze zudosiert. Unter athermanen Partikeln versteht man hierbei Partikel, welche für infrarote Strahlung (Wärmestrahlung) undurchlässig sind.

Man kann die athermanen Partikel auch in eine Schmelze von treibmittelhaltigem Styrol(co)polymerisat oder Formstoff einarbeiten, wobei zweckmäßigerweise ausgesiebte Randfraktionen eines Perlspektrums von bei einer Suspensionspolymerisation entstandenen, treibmittelhaltigen Polystyrolperlen eingesetzt werden. Die Treibmittel und die athermanen Partikel enthaltende Styrol(co)polymerschmelzen oder Formstoffpolymerschmelzen werden ausgepresst und zu treibmittelhaltigem Granulat zerkleinert. Da die athermanen Partikel stark nukleierend wirken können, sollte nach dem Auspressen unter Druck rasch abgekühlt werden, um ein Aufschäumen zu vermeiden. Man führt daher zweckmäßigerweise eine Unterwassergranulierung unter Druck in einem geschlossenen System durch.

Es ist auch möglich, den die athermanen Partikel enthaltenen Styrol(co)polymerisaten oder Formstoffen ein Treibmittel in einem gesonderten Verfahrensschritt zuzusetzen. Hierbei werden die Granulate dann vorzugsweise in wässriger Suspension mit dem Treibmittel imprägniert.

In allen drei Fällen kann man die feinteiligen, athermanen Partikel und das nichtionische Tensid direkt einer Styrol(co)polymerschmelze oder Formstoffschmelze zusetzen. Man kann die athermanen Partikel aber auch in Form eines Konzentrats in Polystyrol der Schmelze zusetzen. Bevorzugt werden aber Styrol(co)polymer-Granulat und athermane Partikel zusammen in einen Extruder eingegeben, das Styrol(co)polymer dort aufgeschmolzen und mit den athermanen Partikeln vermischt.

Besonders bevorzugt werden die expandierbaren Styrol(co)polymerisate (EPS) durch Polymerisation von Styrol und gegebenenfalls den copolymerisierbaren Monomeren der erfindungsgemäßen Copolymere in wässriger Suspension und Imprägnierung mit einem Treibmittel hergestellt, wobei die Polymerisation in Gegenwart von 0,1 bis 5 Gew.% Graphitpartikeln bezogen auf das Styrol(co)polymer und einem nichtionischen Tensid durchgeführt wird. Als nichtionisches Tensid eignen sich beispielsweise Maleinsäureanhydrid-Copolymere (MSA) z. B. aus Maleinsäureanhydrid und C(20)- bis C(24)-Olefin, Polyisobutylen-Bernsteinsäureanhydrid (PIBSA) oder deren Umsetzungsprodukte mit Hydroxy-Polyethylenglycolester, Diethylaminoethanol oder Aminen wie Tridecylamin, Octylamin oder Polyetheramin, Tetraethylenpentamin oder Mischungen davon. Die Molekulargewichte des nichtionischen Tensids liegen bevorzugt im Bereich von 500 bis 3000 g/mol. Sie werden in der Regel in Mengen im Bereich von 0,01 bis 2 Gew.% bezogen auf das Styrol(co)polymer eingesetzt.

Die expandierbaren, athermanen Partikel enthaltenden Styrol(co)polymerisate oder Formstoffe können zu Styrol(co)polymerschaumstoffen mit Dichten von 5 - 200 kg/m³, bevorzugt von 7 bis 100 kg/m³ und insbesondere von 10 - 80 kg/m³, verarbeitet werden.

Hierzu werden die expandierbaren Partikel vorgeschäumt. Dies geschieht zumeist durch Erwärmung der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

Die aus den erfindungsgemäßen, expandierbaren Copolymerisaten oder Formstoffen hergestellten Schaumstoffe zeichnen sich durch eine hervorragende Wärmeisolierung aus. Dieser Effekt zeigt sich besonders deutlich bei niedrigen Dichten.

Die Schaumstoffe oder Formstoffe können zur Wärmedämmung von Gebäuden und Gebäudeteilen, zur thermischen Isolierung von Maschinen und Haushaltsgeräten sowie als Verpackungsmaterialien verwendet werden.

Zur Herstellung der expandierbaren Copolymerisate kann das Treibmittel in die Polymerschmelze eingemischt werden. Ein mögliches Verfahren umfasst die Stufen a) Schmelzerzeugung, b) Mischen, c) Kühlen, d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z. B.:
a) Polymerisationsreaktor - statischer Mischer/Kühler- Granulator
b) Polymerisationsreaktor - Extruder- Granulator
c) Extruder - statischer Mischer - Granulator
d) Extruder - Granulator

Die treibmittelhaltige Copolymerschmelze wird in der Regel mit einer Temperatur im Bereich von 140 bis 300 °C, bevorzugt im Bereich von 160 bis 240 °C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Copolymerschmelze beheizt. Bevorzugt liegt die Temperatur der Düsenplatte im Bereich von 20 bis 100 °C über der Temperatur der treibmittelhaltigen Copolymerschmelze. Dadurch werden Polymerablagerungen in den Düsen verhindert und eine störungsfreie Granulierung gewährleistet.

Um marktfähige Granulatgrößen zu erhalten, sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm 10 liegen. Damit lassen sich auch nach Strangaufweitung Granulatgrößen unter 2 mm, insbesondere im Bereich 0,4 bis 1,4 mm gezielt einstellen.

Besonders bevorzugt wird ein Verfahren zur Herstellung von brandhindernden, expandierbaren Copolymeren (EPS), welches die folgenden Schritte umfasst:
a) Einmischen eines organischen Treibmittels in die Polymerschmelze der erfindungsgemäßen Copolymere und/oder Abmischungen daraus mittels statischer oder dynamischer Mischer bei einer Temperatur von mindestens 150°C,
b) Kühlen der Treibmittel-Copolymerschmelze auf einen Temperaturbereich von 120 bis 200 °C
c) Austrag durch eine Düsenplatte mit Bohrungen, deren Durchmesser am 20 Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

Es ist auch möglich, die erfindungsgemäßen Copolymere und/oder Formmassen durch Suspensionspolymerisation herzustellen. Bei der Suspensionspolymerisation werden als Monomere bevorzugt Styrol, phosphorhaltiges Comonemer und Schwefel eingesetzt. Es kann jedoch bis zu 50 % seines Gewichts durch andere, ethylenisch ungesättigte Monomere ersetzt sein.

Bei der Suspensionspolymerisation können die üblichen Hilfsmittel wie z. B. Peroxidinitiatoren, Suspensionsstabilisatoren, Treibmittel, Kettenüberträger, Expandierhilfsmittel, Keimbildner und Weichmacher zugesetzt werden. Treibmittel werden in Mengen von 3 bis 10 Gew.%, bezogen auf das bzw. die Monomer/e zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsstabilisatoren anorganische Pickering-Dispergatoren wie z. B. Magnesiumpyrophosphat oder Calciumphosphat einzusetzen.

Bei der Suspensionspolymerisation entstehen perlförmige, im Wesentlichen runde Teilchen mit einem mittleren Durchmesser im Bereich von 0,2 bis 2 mm. Zur Verbesserung der Verarbeitbarkeit können die fertigen, expandierbaren Copolymerperlen und -granulate mit den üblichen und bekannten Beschichtungsmitteln wie beispielsweise Metallstearaten, Glycerinestern und feinteiligen Silikaten, Antistatika oder Antiverklebungsmittel beschichten werden.

Das EPS-Granulat kann mit Glycerinmonostearat (GMS, typischerweise 0,25 Gew.%), Glycerintristearat (typischerweise 0,25 Gew.%), feinteiliger Kieselsäure (Aerosil R972, typischerweise 0,12 Gew.%) und Zink-Stearat (typischerweise 0,15 Gew.%) sowie Antistatikum beschichtet werden.

Die expandierbaren Copolymerteilchen können zu Polystyrolschaumstoffen mit Dichten von 8 bis 200 kg/m³, bevorzugt von 10 bis 100 kg/m³ verarbeitet werden. Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern bzw. Halbzeugen oder Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

### Beispiele

### Synthese der Monomere:

### Monomer (25): Hexakisallyloxy-cyclotriphosphazene

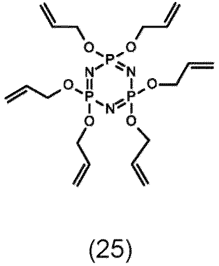

Synthetisiert nach M. Dutkiewicz et al., Polymer Degradation and Stability 2018, 148, Seiten 10 - 18.

### Monomer (26): Diethyl-2-Methacryloyloxy-Ethylphosphat

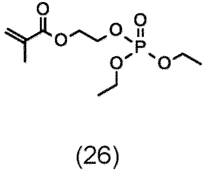

2-Hydroxyethyl-Methacrylat (929 mg, 7,12 mmol), destilliertes Triethylamin (741 mg, 7,32 mmol) und Kupfer(I)chlorid (11,38 mg, 0,11 mmol) wurden in ca. 10 ml peroxidfreiem Diethylether gemischt, sauerstofffrei gemacht und in einem Eisbad abgekühlt. Diethylchlorphosphat (1474 mg, 8,54 mmol) gelöst in 4 ml Diethylether wurde tropfenweise hinzugegeben. Die Mischung wurde für eine Stunde im Eisbad und 48 h bei Raumtemperatur gerührt, anschließend filtriert und das Lösungsmittel evaporiert.

¹H-NMR (500 MHz, CDCl₃): 1,30 ppm (6 Protonen, -P-O-CH₂-CH₃), 1,93 (3 Protonen, -CH₃ Acrylat), 4,10 (4 Protonen, -P-O-CH₂-CH₃), 4,26 und 4,35 (je 2 Protonen, -O-CH₂-CH₂-O-), 5,59 und 6,14 (je 1 Proton, CH₂=C-);

### Monomer (27): Diphenyl-2-Methacryloyloxy-Ethylphosphat

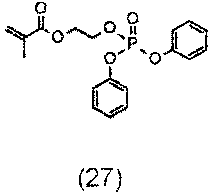

2-Hydroxyethyl-Methacrylat (929 mg, 7,12 mmol), destilliertes Triethylamin (741 mg, 7,32 mmol) und Kupfer(I)chlorid (11,38 mg, 0,11 mmol) wurden in ca. 10 ml peroxidfreiem Diethylether gemischt, sauerstofffrei gemacht und in einem Eisbad abgekühlt. Diphenylchlorphosphat (1860 mg, 7,12 mmol) gelöst in 4 ml Diethylether wurde tropfenweise hinzugegeben. Die Mischung wurde für eine Stunde im Eisbad und 48 h bei Raumtemperatur gerührt, anschließend filtriert und das Lösungsmittel evaporiert.

¹H-NMR (500 MHz, CDCl₃): 1,91 ppm (3 Protonen, -CH₃ Acrylat), 4,38 und 4,48 (je 2 Protonen, -O-CH₂-CH₂-O-), 5,56 und 6,11 (je 1 Proton, CH₂=C-), 7,22 und 7,33 (10 Protonen, Aromaten)

### Monomer (28): Diphenyl-2-Acryloyloxy-Ethylphosphat

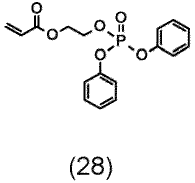

2-Hydroxyethyl-Acrylat (826 mg, 7,12 mmol), destilliertes Triethylamin (741 mg, 7,32 mmol) und Kupfer(I)chlorid (11,38 mg, 0,11 mmol) wurden in ca. 10 ml peroxidfreiem Diethylether gemischt, sauerstofffrei gemacht und in einem Eisbad abgekühlt. Diphenylchlorphosphat (1860 mg, 7,12 mmol) gelöst in 4 ml Diethylether wurde tropfenweise hinzugegeben. Die Mischung wurde für eine Stunde im Eisbad und 48 h bei Raumtemperatur gerührt, anschließend filtriert und das Lösungsmittel evaporiert.

¹H-NMR (500 MHz, CDCl₃): 4,38 und 4,48 (je 2 Protonen (-O-CH₂-CH₂-O-), 5,85, 6,08 und 6,41 (je 1 Proton, CH₂=CH-), 7,23 und 7,34 (6 und 4 Protonen, Aromaten)

### Monomer (29): Diphenyl-Methacryloyloxy-butylphosphat

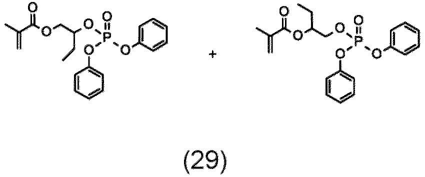

Hydroxybutyl-Methacrylat (2:1 Isomerengemisch) (1125 mg, 7,12 mmol), destilliertes Triethylamin (741 mg, 7,32 mmol) und Kupfer(I)chlorid (11,38 mg, 0,11 mmol) wurden in ca. 10 ml peroxidfreiem Diethylether gemischt, sauerstofffrei gemacht und in einem Eisbad abgekühlt. Diphenylchlorphosphat (1860 mg, 7,12 mmol) gelöst in 4 ml Diethylether wurde tropfenweise hinzugegeben. Die Mischung wurde für eine Stunde im Eisbad und 48 h bei Raumtemperatur gerührt, anschließend filtriert und das Lösungsmittel evaporiert.

1H-NMR (500 MHz, CDCl₃), δ (ppm): 0.92/0.96 (t, 6H, CH₃); 1.69/1.77 (q, 4H, CH₂); 1.90 (s, 6H, CH₃); 4.24/4.34 (m, 2H, -O-CH₂-); 4.80 (d, 2H, CH₂); 5.06 (q, 2H, CH); 5.52 (s, 1H, CH vinyl trans zu Carbonyl); 6.10 (s, 1H, CH vinyl cis zu Carbonyl); 7.20/7.32 (Aromaten-H).

### Monomer (30): Diphenyl-4-Acryloyloxy-Butylphosphat

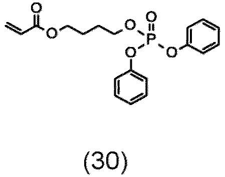

4-Hydroxybutyl -Acrylat (1025 mg, 7,12 mmol), destilliertes Triethylamin (741 mg, 7,32 mmol) und Kupfer(I)chlorid (11,38 mg, 0,11 mmol) wurden in ca. 10 ml peroxidfreiem Diethylether gemischt, sauerstofffrei gemacht und in einem Eisbad abgekühlt. Diphenylchlorphosphat (1860 mg, 7,12 mmol) gelöst in 4 ml Diethylether wurde tropfenweise hinzugegeben. Die Mischung wurde für eine Stunde im Eisbad und 48 h bei Raumtemperatur gerührt, anschließend filtriert und das Lösungsmittel evaporiert.

¹H-NMR (500 MHz, CDCl₃): 1,76 ppm (4 Protonen, -O-CH₂-(CH₂)₂-CH₂-O-), 4,16 und 4,30 (je 2 Protonen, -O-CH₂-(CH₂)₂-CH₂-O-), 5,83, 6,11 und 6,36 (je 1 Proton, CH₂=CH-), 7,22 und 7,33 (6+4 Protonen, Aromaten)

### Monomer (31): Diethyl p-vinylbenzylphosphonate

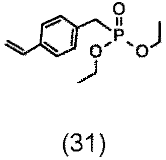

Kalium-tert.-Butanolat (4,4 g, 39,3 mmol) wurden in THF (40 ml, trocken) bei 0 °C unter Inertgas suspendiert, bevor Diethylphosphonat (5,4 g, 39,3 mmol) gelöst in THF (20 ml) zugetropft wurde. Die Mischung wurde für 30 min gerührt, ehe sie bei 0 °C in eine Lösung von Chlormethylstyrol (3,0 g, 19,7 mmol), TBHQ (2-tert.-Butylhydrochinon) und TBAI (Tetrabutylammoniumiodid) in THF (20 ml) getropft wurde. Nach 18 Stunden bei 20 °C unter Inertgas wurden die Feststoffe abgetrennt und das Lösungsmittel abdestilliert.

¹H NMR (CDCl₃, 500 MHz) δ (ppm): 1.21 (t, 6H, CH₂-CH₃), 3.16 (d, 2H, CH₂-P), 4.02 (m, 4H, P-O-CH₂), 5.22/ 5.73 (d, 2H, CH=CH₂); 6.68 (dd, 1H, CH=CH₂); 7.24 - 7.34 (m, 4H aromatic).

IR (cm⁻¹): 3025 (Ar-H), 2850-2953 (alkyl-H), 1600 (CH₂=CH-Ar); 1512 (C-C, Ar); 1250 (P=O), 1027 (P-O-C); 957 (C=C), 854 (Ar-H).

### Monomer (32): Diphenyl-2-Methacryloyloxy-Ethylphosphinate

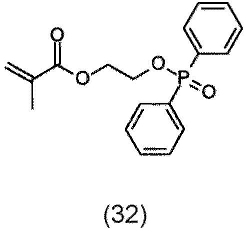

2-Hydroxyethylmethacrylat (2,0 g, 15,5 mmol) wurde zusammen mit Triethylamin (1,7 g, 16,5 mmol) und Kupfer(I)-chlorid (0,06 g) in Diethylether (20 ml) für 1 Stunde bei 0 °C unter Inertgas gerührt, bevor Diphenylphosphinsäurechlorid (3,7 g, 15,8 mmol) gelöst in Diethylether (5 ml) zugetropft wurde. Nach 24 Stunden Rühren bei 20 °C wurde das Triethylammoniumchlorid entfernt und das Lösungsmittel abdestilliert.

¹H NMR (CDCl₃, 500 MHz) δ (ppm): 1.92 (s, 3H, α-CH₃), 4.25 (t, 2H, CH₂-O-P), 4.40 (t, 2H, O-CH₂-CH₂-), 5.58/ 6.05 (s, 2H, C=CH2), 7.42 - 7.78 (m, 10Hₐᵣₒₘ).

### Monomer (33): Dimethyl[(4-ethenylphenyl)methyl]phosphonat

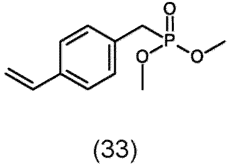

Kalium-tert.-Butanolat (5,0 g, 44,1 mmol) wurden in THF (40 ml, trocken) bei 0 °C unter Inertgas suspendiert, bevor Dimethylphosphonat (4,9 g, 44,1 mmol) gelöst in THF (20 ml) zugetropft wurde. Die Mischung wurde für 30 min gerührt, ehe sie bei 0 °C in eine Lösung von Chlormethylstyrol (3,4 g, 22,1 mmol), TBHQ (2-tert.-Butylhydrochinon) und TBAI (Tetrabutylammoniumiodid) in THF (20 ml) getropft wurde. Nach 18 Stunden bei 20 °C unter Inertgas wurden die Feststoffe abgetrennt und das Lösungsmittel abdestilliert.

¹H NMR (CDCl₃, 500 MHz) δ (ppm): 3.15 (d, 2H, CH₂-P), 3.65 (d, 6H, P-O-CH₃), 5.22/ 5.72 (d, 2H, CH=CH₂); 6.66 (dd, 1H, CH=CH₂); 7.22 - 7.34 (m, 4H arom.).

IR (cm⁻¹): 3020 (Ar-H), 2850-2953 (alkyl-H), 1600 (CH₂=CH-Ar); 1512 (C-C, Ar); 1250 (P=O), 1027 (P-O-C); 957 (C=C), 854 (Ar-H).

### Monomer (34): Dibutyl[(4-ethenylphenyl)methyl]phosphonat:

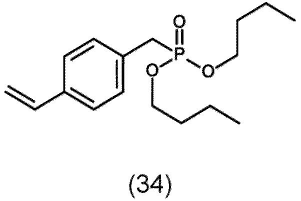

Kalium-tert.-Butanolat (5,0 g, 44,1 mmol) wurden in THF (40 ml, trocken) bei 0 °C unter Inertgas suspendiert, bevor Dibutylphosphonat (8,6 g, 44,1 mmol) gelöst in THF (20 ml) zugetropft wurde. Die Mischung wurde für 30 min gerührt, ehe sie bei 0 °C in eine Lösung von Chlormethylstyrol (3,4 g, 22,1 mmol), TBHQ (2-tert.-Butylhydrochinon) und TBAI (Tetrabutylammoniumiodid) in THF (20 ml) getropft wurde. Nach 18 Stunden bei 20 °C unter Inertgas wurden die Feststoffe abgetrennt und das Lösungsmittel abdestilliert.

¹H NMR (CDCl₃, 500 MHz) δ (ppm): 0.89 (t, 6H, CH₃), 1.34 (sextet, 4H, CH₂-CH₃), 1.56 (quintet, 4H, CH₂-CH₂-CH₃), 3.16 (d, 2H, CH₂-P), 3.93 (m, 4H, P-O-CH₂), 5.22/ 5.74 (d, 2H, CH=CH₂); 6.70 (dd, 1H, CH=CH₂); 7.24 - 7.34 (m, 4H arom.).

IR (cm⁻¹): 3025 (Ar-H), 2850-2953 (alkyl-H), 1600 (CH2=CH-Ar); 1512 (C-C, Ar); 1250 (P=O), 1027 (P-O-C); 957 (C=C), 854 (Ar-H).

### Monomer (35): Diethyl-4-Acryloyloxy-Butylphosphat:

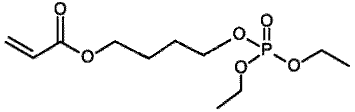

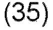

4-Hydroxybutylacrylat (5,3 g, 37 mmol) wurde zusammen mit Triethylamin (3,8 g, 38 mmol) und Kupfer(I)-chlorid (0,1 g) in Diethylether (30 ml) für 1 Stunde bei 0 °C unter Inertgas gerührt, bevor Diethylchlorphosphat (6,5 g, 38 mmol) gelöst in Diethylether (10 ml) zugetropft wurde. Nach 24 Stunden Rühren bei 20 °C wurde das Triethylammoniumchlorid entfernt und das Lösungsmittel abdestilliert.

¹H-NMR (500 MHz, CDC!₃), δ(ppm): 1.33 (t, 6H, CH₃); 1.78 (q, 4H, CH₂); 4.09/4.18 (m, 8H, -O-CH₂-); 5.82/6.10/6.37 (3H, CH₂=CH-)

### Monomer (36): Dimethyl-2-Methacryloyloxy-Ethylphosphonate:

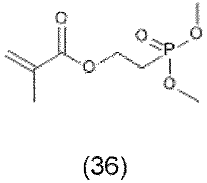

Zu einer Lösung auf 2-Hydroxyethylmethacrylat (3,0 g, 23,0 mmol), Triethylamin (2,5 g, 25 mmol) und 4-(Dimethylamino)-pyridin (60 mg, 0,5 mmol) in Dichlormethan (10 mL) wurde bei 0 °C unter Inertgas Tosylchlorid (4,3 g, 22,6 mmol), gelöst in Dichlormethan (15 mL) unter Rühren zugetropft. Nach 6 Stunden wurde bei 20 °C Dimethylphosphonat (5,0 g, 45,8 mmol), gelöst in Dichlormethan (20 mL) zugetropft und für 18 Stunden gerührt. Die Feststoffe wurden abgetrennt und die flüchtigen Bestandteile entfernt.

¹H NMR (CDCl₃, 500 MHz) δ (ppm): 1.94 (s, 3H, α-CH₃), 3.12 (t, 2H, CH₂-P), 3.7-4.30 (s, 6H, P-O-CH₃), 5.58/6.05 (s, 2H, CH=CH₂).

IR (cm⁻¹): 2961 (alkyl-H), 1717 (C=O), 1634 (C=C), 1456 (C-H), 1362 (C-P), 1262 (P=O), 1173 (C-O), 1043 (P-O-C), 977 (C-H).

### Monomer (37): Diethyl-2-Methacryloyloxy-Ethylphosphonate:

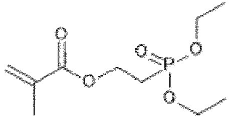

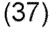

Zu einer Lösung auf 2-Hydroxyethylmethacrylat (2,7 g, 20,5 mmol), Triethylamin (2,1 g, 21 mmol) und 4-(Dimethylamino)-pyridin (60 mg, 0,5 mmol) in Dichlormethan (10 mL) wurde bei 0 °C unter Inertgas Tosylchlorid (3,8 g, 20,1 mmol), gelöst in Dichlormethan (15 mL) unter Rühren zugetropft. Nach 6 Stunden wurde bei 20 °C Diethylphosphonat (5,6 g, 40,7 mmol), gelöst in Dichlormethan (20 mL) zugetropft und für 18 Stunden gerührt. Die Feststoffe wurden abgetrennt und die flüchtigen Bestandteile entfernt.

¹H NMR (CDCl₃, 500 MHz) δ (ppm): 1.34 (t, 6H, CH₂-CH₃), 1.94 (s, 3H, α-CH₃), 3.19 (t, 2H, CH₂-P), 4.12 (q, 4H, P-O-CH₂), 5.55/ 6.02 (s, 2H, CH=CH₂).

IR (cm⁻¹): 2956 (alkyl-H), 1717 (C=O), 1634 (C=C), 1456 (C-H), 1362 (C-P), 1261 (P=O), 1173 (C-O), 1043 (P-O-C), 977 (C-H).

### Monomer (38): Dibutyl-2-Methacryloyloxy-Ethylphosphonate:

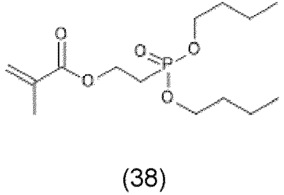

Zu einer Lösung auf 2-Hydroxyethylmethacrylat (2,1 g, 16,4 mmol), Triethylamin (1,7 g, 17 mmol) und 4-(Dimethylamino)-pyridin (40 mg, 0,3 mmol) in Dichlormethan (10 mL) wurde bei 0 °C unter Inertgas Tosylchlorid (3,2 g, 16,6 mmol), gelöst in Dichlormethan (15 mL) unter Rühren zugetropft. Nach 6 Stunden wurde bei 20 °C Dibutylphosphonat (6,4 g, 33,0 mmol), gelöst in Dichlormethan (20 mL) zugetropft und für 18 Stunden gerührt. Die Feststoffe wurden abgetrennt und die flüchtigen Bestandteile entfernt.

¹H NMR (CDCl₃, 500 MHz) δ (ppm): 0.93 (t, 6H, CH₃), 1.39 (sextet, 4H, CH₂-CH₃), 1.64 (quintet, 4H, CH₂-CH₂-CH₃), 1.95 (s, 3H, α-CH₃), 3.09 (m, 2H, CH₂-P), 4.05 (m, 4H, PO-CH₂), 5.56/ 6.10 (s, 2H, CH=CH₂).

IR (cm⁻¹): 2982 (alkyl-H), 1734 (C=O), 1639 (C=C), 1456 (C-H), 1362 (C-P), 1258 (P=O), 1173 (C-O), 1017 (P-O-C), 977 (C-H).

### Synthese der Copolymere:

### Verwendete Materialien:

Für die durchgeführten Synthesen der Copolymere wurden Styrol (99%, Acros Organics / Stabilisator entfernt), Schwefel (>99%, Alfa Aesar), Divinylbenzol (Merck KGaA, enthält 25 - 50% Ethylstyrol), Metharcylsäureallylester (98%, Sigma Aldrich, stab. mit 50-185 ppm MEHQ), Vinylphosphonsäure (97%, Sigma Aldrich), Diphenyl(4-vinylphenyl)phosphine (97%, Sigma Aldrich) und die synthetisierten Monomere der Formeln (25) bis (38) verwendet.

Bezüglich der nachfolgenden Copolymerstrukturen 6a) bis (24a) gelten die Aussagen hinsichtlich der Angabe der Wiederholungseinheiten zu den Formeln (6) bis Formel (24) analog. Wegen der zufälligen Verteilung der Monomereinheiten innerhalb des Copolymers wurde auf die Angabe des "n" als Wiederholungseinheit verzichtet.

### Copolymer (6): Poly(styrene-ran-diethyl-2-methacryloyloxy-ethylphosphate-ran-sulfur) Beispiel (6a)

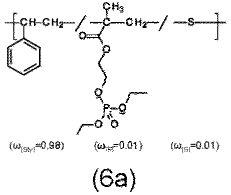

### Synthese von (6a):

Schwefel (310 mg, 1 Gew.%), Styrol (30,98 g, 98 Gew.%) und Monomer (26) (320 mg, 1 Gew.%) wurden miteinander gemischt und durch drei Gefrierentgasungszyklen sauerstofffrei gemacht. Die Mischung wurde für 72 h auf 130 °C erhitzt. Nach Lösen in THF wurde das Produkt durch Fällung in Methanol isoliert.
EA: C 90.9 %, H 8.4 %, S 0.2 %;
TGA: Td_{5%}: 405 °C
DCS: T_{g}: 90,3 °C
GPC (UV Detektor): Mn 32 kDa; Mw 62 kDa.

Verbindung (6a) weist besonders gute flammhemmende Eigenschaften auf. Dies ist darauf zurückzuführen, dass neben der phosphorhaltigen Monomereinheit ein hohes Molekulargewicht vorhanden ist.

### Copolymer (7): Poly(styrene-ran-diphenyl-2-methacryloyloxy-ethylphosphate-ran-sulfur)

### Beispiel (7a)

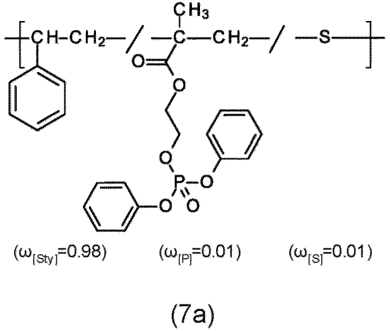

Verbindung (7a) weist besonders gute flammhemmende Eigenschaften auf. Dies ist darauf zurückzuführen, dass neben der phosphorhaltigen Monomereinheit ein hohes Molekulargewicht vorhanden ist.

### Synthese von (7a):

Schwefel (1,5 g, 1 Gew.%), Styrol (147 g, 98 Gew.%) und Monomer (27) (1,5 g, 1 Gew.%) wurden miteinander gemischt und durch drei Gefrierentgasungszyklen sauerstofffrei gemacht. Die Mischungen wurden für 72 Std. auf 130 °C erhitzt. Nach Lösen in THF wurde das Produkt durch Fällen in Methanol isoliert.
TGA: Td_{5%} (°C) = 325;
DSC: T_{g} (°C) = 96,7;
GPC (UV Detektor): Mw (kDa) = 46; Mn (kDa) = 10.

### Copolymer (8): Poly(styrene-ran-diphenyl-2-acryloyloxy-ethylphosphate-ran-sulfur) Beispiel (8a)

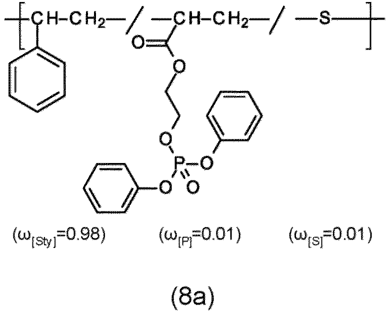

### Synthese von (8a):

Schwefel (1,5 g, 1 Gew.%), Styrol (147 g, 98 Gew.%) und Monomer (28) (1,5 g, 1 Gew.%) wurden miteinander gemischt und durch drei Gefrierentgasungszyklen sauerstofffrei gemacht. Die Mischungen wurden für 72 Std. auf 130 °C erhitzt. Nach Lösen in THF wurde das Produkt durch Fällen in Methanol isoliert.
TGA: Td_{5%} (°C) = 325;
DSC: T_{g} (°C) = 94,2;
GPC (UV Detektor): Mw (kDa) = 46; Mn (kDa) = 11,8.

Verbindung (8a) weist besonders gute flammhemmende Eigenschaften auf. Dies ist darauf zurückzuführen, dass neben der phosphorhaltigen Monomereinheit ein hohes Molekulargewicht vorhanden ist.

### Beispiel (8b)

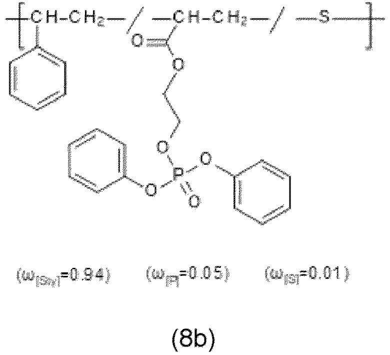

### Synthese von (8b):

Schwefel (1,6 g, 1 Gew.%), Styrol (138,4 g, 94 Gew.%) und Monomer (28) (10,0 g, 5 Gew.%) wurden miteinander gemischt und durch drei Gefrierentgasungszyklen sauerstofffrei gemacht. Die Mischungen wurden für 72 Stunden auf 130 °C erhitzt. Nach Lösen in THF wurde das Produkt durch Fällen in Methanol isoliert.
TGA: Td_{5%} (°C) = 350;
DSC: T_{g} (°C) = 96,8;
GPC (UV Detektor): Mw (kDa) =49,5; Mn (kDa) =7,3

### Copolymer (9): Poly(styrene-ran-diphenyl-methacryloyloxy-n-butylphosphate-ran-sulfur)

### Beispiel (9a)

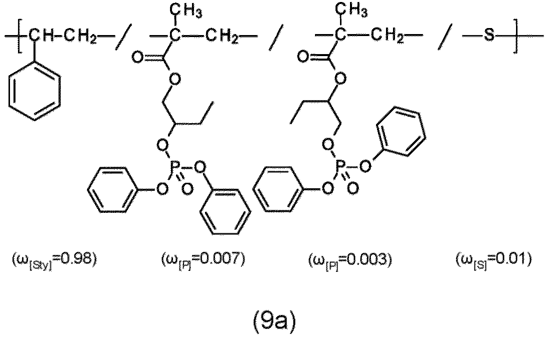

### Synthese von (9a):

Schwefel (1,5 g, 1 Gew.%), Styrol (147 g, 98 Gew.%) und Monomer (29) (1,5 g, 1 Gew.%) wurden miteinander gemischt und durch drei Gefrierentgasungszyklen sauerstofffrei gemacht. Die Mischungen wurden für 72 Std. auf 130 °C erhitzt. Nach Lösen in THF wurde das Produkt durch Fällen in Methanol isoliert.
TGA: Td_{5%} (°C) = 290;
DSC: T_{g} (°C) = 83,4;
GPC: Mw (kDa) = 40; Mn (kDa) = 13,3.

### Copolymer (10): Poly(styrene-ran-diphenyl-4-Acryloyloxy-butylphosphate-ran-sulfur)

### Beispiel (10a)

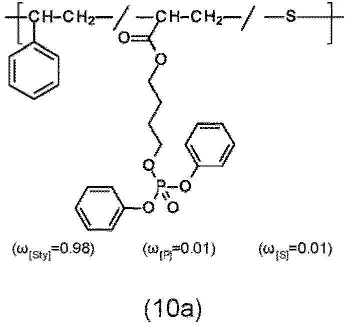

### Synthese von (10a):

Schwefel (1,5 g, 1 Gew.%), Styrol (147 g, 98 Gew.%) und Monomer (30) (1,5 g, 1 Gew.%) wurden miteinander gemischt und durch drei Gefrierentgasungszyklen sauerstofffrei gemacht. Die Mischungen wurden für 72 Std. auf 130 °C erhitzt. Nach Lösen in THF wurde das Produkt durch Fällen in Methanol isoliert.
TGA: Td_{5%} (°C) = 325;
DSC: T_{g} (°C) = 93,5;
GPC (UV Detektor): Mw (kDa) = 51; Mn (kDa) = 12,1.

### Copolymer (11): Poly(styrene-ran-diphenyl-2-methacryloyloxy-ethylphosphinate-ran-sulfur)

### Beispiel (11a)

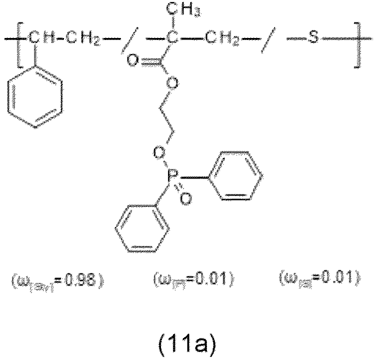

### Synthese von (11a):

Schwefel (0,1 g, 1 Gew.%), Styrol (9,8 g, 98 Gew.%) und Monomer (32) (0,1 g, 1 Gew.%) wurden miteinander gemischt und durch drei Gefrierentgasungszyklen sauerstofffrei gemacht. Die Mischungen wurden für 72 Stunden auf 130 °C erhitzt. Nach Lösen in THF wurde das Produkt durch Fällen in Methanol isoliert.
GPC (UV Detektor): Mw (kDa) =34,0; Mn (kDa) =3,3
Copolymer (14): Poly(styrene-*ran*-diethyl p-vinylbenzylphosphonate-*ran*-sulfur)

### Beispiel (14a)

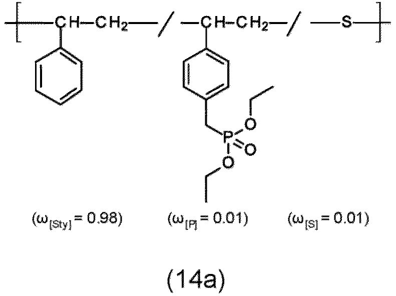

### Synthese von (14a):

Schwefel (0,1 g, 1 Gew.%), Styrol (9,8 g, 98 Gew.%) und Monomer (31) (0,1 g, 1 Gew.%;) wurden miteinander gemischt und durch drei Gefrierentgasungszyklen sauerstofffrei gemacht. Die Mischungen wurden für 72 Std. auf 130 °C erhitzt. Nach Lösen in THF wurde das Produkt durch Fällen in Methanol isoliert.
GPC (UV Detektor): Mw (kDa) =14,6; Mn (kDa) =2,5

### Copolymer (16): Poly(styrene-ran-allyl-methacrylate-ran-sulfur) (not according to the invention)

### Beispiel (16a)

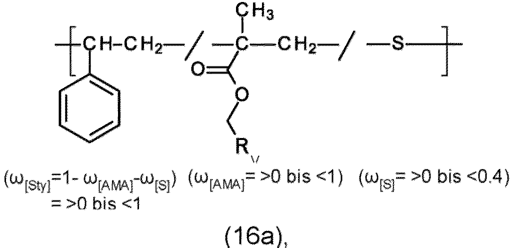

wobei ω_{[AMA]} dem Massenanteil des Methacrylsäureallylesters entspricht und Rv bestehend aus Vinyl oder einer kovalenten Anbindung zu einem weiteren Polymer der Formel (1) bedeutet.

### Synthese von (16):

Schwefel (0,01 g, 1 Gew.%), Styrol (0,98 g, 98 Gew.%) Methacrylsäureallylester (0,01 g, 1 Gew.%) und Azodiisobutyronitril (AIBN, 0,07 g) wurden miteinander gemischt und durch drei Gefrierentgasungszyklen sauerstofffrei gemacht. Die Mischung wurde für 4 Stunden auf 80 °C erhitzt. Nach Lösen in THF wurde das Produkt durch Fällen in Methanol isoliert.
GPC (UV Detektor): Mw (kDa) =22; Mn (kDa) =6

### Copolymer (17): Poly(styrene-ran-diethyl-4-methacryloyloxy-butylphosphate-ran-sulfur)

### Beispiel (17a)

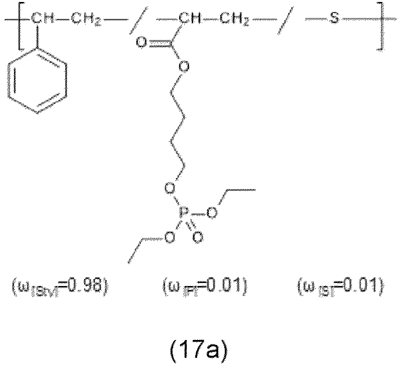

### Synthese von (17a):

Schwefel (0,01 g, 1 Gew.%), Styrol (0,98 g, 98 Gew.%) und Monomer (35) (0,01 g, 1 Gew.%) wurden miteinander gemischt und durch drei Gefrierentgasungszyklen sauerstofffrei gemacht. Die Mischungen wurden für 72 Stunden auf 130 °C erhitzt. Nach Lösen in THF wurde das Produkt durch Fällen in Methanol isoliert.
TGA: Td_{5%} (°C) = 325;
DSC: T_{g} (°C) = 97,9;
GPC (UV Detektor): Mw (kDa) =25,8; Mn (kDa) =5,3

### Copolymer (18): Poly(styrene-ran-2-methacryloyloxy-methylphosphonate-ran-sulfur)

### Beispiel 18a

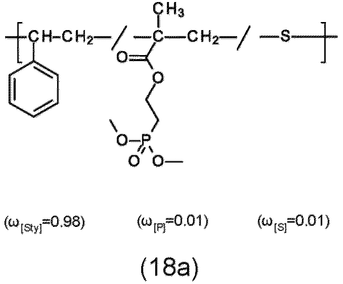

### Synthese von (18a):

Schwefel (0,01 g, 1 Gew.%), Styrol (0,98 g, 98 Gew.%) , Monomer (36) (0,01 g, 1 Gew.%) und Azodiisobutyronitril (AIBN, 70 mg, 5 mol% auf Styrol) wurden miteinander gemischt und durch drei Gefrierentgasungszyklen sauerstofffrei gemacht. Die Mischung wurde für 40 Stunden auf 80 °C erhitzt. Nach Lösen in THF wurde das Produkt durch Fällen in Methanol isoliert.
GPC (UV Detektor): Mw (kDa) =16,2; Mn (kDa) =3,9;
IR (P=O, 1247 cm-1): nachweisbar

### Copolymer (19): Poly(styrene-ran-2-methacryloyloxy-methylphosphonate-ran-sulfur)

### Beispiel (19a)

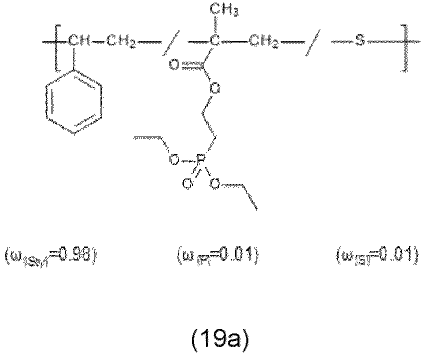

### Synthese von (19a):

Schwefel (0,01 g, 1 Gew.%), Styrol (0,98 g, 98 Gew.%), Monomer (37) (0,01 g, 1 Gew.%) und Azodiisobutyronitril (AIBN, 70 mg, 5 mol% auf Styrol) wurden miteinander gemischt und durch drei Gefrierentgasungszyklen sauerstofffrei gemacht.

Die Mischung wurde für 40 Stunden auf 80 °C erhitzt. Nach Lösen in THF wurde das Produkt durch Fällen in Methanol isoliert.
GPC (UV Detektor): Mw (kDa) =8,7; Mn (kDa) =2,9;
IR (P=O, 1247 cm⁻¹): nachweisbar

### Copolymer (20): Poly(styrene-ran-2-methacryloyloxy-butylphosphonate-ran-sulfur)

### Beispiel (20a)

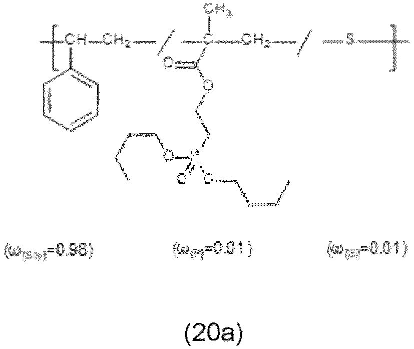

### Synthese von (20a):

Schwefel (0,01 g, 1 Gew.%), Styrol (0,98 g, 98 Gew.%), Monomer (38) (0,01 g, 1 Gew.%) und Azodiisobutyronitril (AIBN, 70 mg, 5 mol% auf Styrol) wurden miteinander gemischt und durch drei Gefrierentgasungszyklen sauerstofffrei gemacht. Die Mischung wurde für 40 Stunden auf 80 °C erhitzt. Nach Lösen in THF wurde das Produkt durch Fällen in Methanol isoliert.
GPC (UV Detektor): Mw (kDa) =13,8; Mn (kDa) =3,6;

### Copolymer (21): Poly(styrene-ran-dimethyl [(4-ethenylphenyl)methyl]phosphonat-ran-sulfur)

### Beispiel (21a)

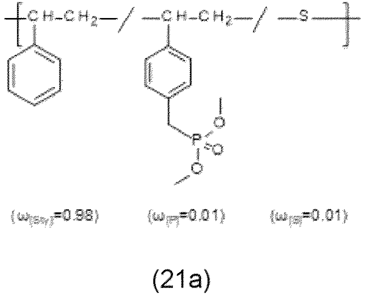

### Synthese von (21a):

Schwefel (0,01 g, 1 Gew.%), Styrol (0,98 g, 98 Gew.%) , Monomer (33) (0,01 g, 1 Gew.%) und Azodiisobutyronitril (AIBN, 70 mg, 5 mol% auf Styrol) wurden miteinander gemischt und durch drei Gefrierentgasungszyklen sauerstofffrei gemacht. Die Mischung wurde für 40 Stunden auf 80 °C erhitzt. Nach Lösen in THF wurde das Produkt durch Fällen in Methanol isoliert.
GPC (UV Detektor): Mw (kDa) =6,0; Mn (kDa) =3,6
IR (P=O, 1247 cm-1): nachweisbar

### Copolymer (22): Poly(styrene-ran-dibutyl[(4-ethenylphenyl)methyl]phosphonat -ran-sulfur)

### Beispiel (22a)

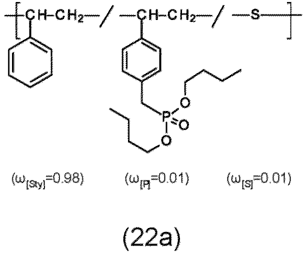

### Synthese von (22a):

Schwefel (0,01 g, 1 Gew.%), Styrol (0,98 g, 98 Gew.%), Monomer (34) (0,01 g, 1 Gew.%) und Azodiisobutyronitril (AIBN, 15,6 mg, 5 mol% auf Styrol) wurden miteinander gemischt und durch drei Gefrierentgasungszyklen sauerstofffrei gemacht. Die Mischung wurde für 40 Stunden auf 80 °C erhitzt. Nach Lösen in THF wurde das Produkt durch Fällen in Methanol isoliert.
GPC (UV Detektor): Mw (kDa) =15,0; Mn (kDa) =3,0
IR (P=O, 1247 cm⁻¹): nachweisbar

### Copolymer (23): Poly(styrene-ran-vinylphosphonic acid-ran-sulfur)

### Beispiel (23a)

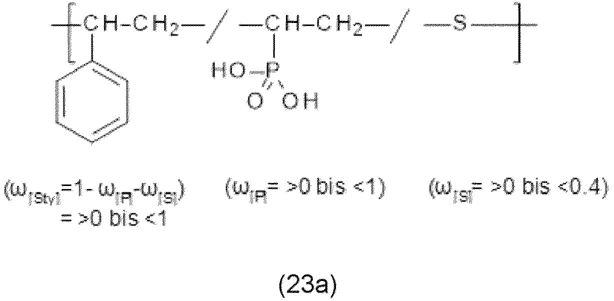

### Synthese von (23a):

Schwefel (0,2 g, 1 Gew.%), Styrol (19,6 g, 98 Gew.%), Vinylphosphonsäure (0,2 g, 1 Gew.%) und Azodiisobutyronitril (AIBN, 1,3 g, 5 mol% auf Styrol) wurden miteinander gemischt und durch drei Gefrierentgasungszyklen sauerstofffrei gemacht. Die Mischung wurde für 15 Stunden auf 80 °C erhitzt. Nach Lösen in THF wurde das Produkt durch Fällen in Methanol isoliert.
GPC (UV Detektor): Mw (kDa) =28,7; Mn (kDa) =7,7

### Copolymer (24): Poly(styrene-ran-diphenyl(4-vinylphenyl)phosphine-ran-sulfur)

### Beispiel (24a)

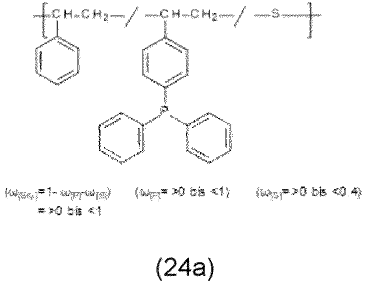

### Synthese von (24a):

Schwefel (0,2 g, 1 Gew.%), Styrol (19,6 g, 98 Gew.%) Diphenylphosphinostyrol (0,2 g, 1 Gew.%) und Azodiisobutyronitril (AIBN, 1,3 g, 5 mol% auf Styrol) wurden miteinander gemischt und durch drei Gefrierentgasungszyklen sauerstofffrei gemacht. Die Mischung wurde für 15 Stunden auf 80 °C erhitzt. Nach Lösen in THF wurde das Produkt durch Fällen in Methanol isoliert.
GPC (UV Detektor): Mw (kDa) =17,9; Mn (kDa) =6,9

### Herstellung der brandhindernden Formmassen

Verwendete Polymere und Zuschlagsstoffe für die Herstellung der brandhindernden Formstoffe oder -massen:

| Polymer / Zuschlagsstoff | Typ und Hersteller | Kürzel |
|---|---|---|
| Polystyrol | Polystyrol 158K, BASF SE, Ludwigshafen, Deutschland | PS |
| 2,4,8,10-Tetraoxa-3,9-diphosphaspiro [5.5] undecane-3,9-dimethyl-3,9-dioxide | Aflammit PCO 900, Thor GmbH, Speyer, Deutschland | P1 |
| Hexakisphenoxycyclotriphosphazene | aber GmbH, Karlsruhe, Deutschland | P2 |

### Herstellung der Schaumkörper zur Brandprüfung

### VB1:

Zunächst wurden 20 g PS in Dichlormethan gelöst. Anschließend wurde die Lösung in eine 20 cm x 10 cm Aluminiumform gefüllt und bei Raumtemperatur (RT) für 24 h getrocknet. Das getrocknete Polymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### VB2:

Zunächst wurden 20 g PS und 0,5 g P1 in Dichlormethan gelöst. Anschließend wurde die Lösung in eine 20 cm x 10 cm Aluminiumform gefüllt und bei Raumtemperatur (RT) für 24 h getrocknet. Der getrocknete Compound wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### VB3:

Zunächst wurden 20 g PS und 0,95 g P2 in Dichlormethan gelöst. Anschließend wurde die Lösung in eine 20 cm x 10 cm Aluminiumform gefüllt und bei Raumtemperatur (RT) für 24 h getrocknet. Der getrocknete Compound wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB1:

Zunächst wurden 20 g (2a) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB2:

Zunächst wurden 20 g (2a) und 0,95 g P2 in Dichlormethan gelöst. Anschließend wurde die Lösung in eine 20 cm x 10 cm Aluminiumform gefüllt und bei Raumtemperatur (RT) für 24 h getrocknet. Der getrocknete Compound wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB3:

Zunächst wurden 20 g (2b) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB4:

Zunächst wurden 20 g (2b) und 0,5 g P1 in Dichlormethan gelöst. Anschließend wurde die Lösung in eine 20 cm x 10 cm Aluminiumform gefüllt und bei Raumtemperatur (RT) für 24 h getrocknet. Der getrocknete Compound wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB5:

Zunächst wurden 20 g (3a) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB6:

Zunächst wurden 20 g (4a) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB7:

Zunächst wurden 20 g (4b) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB8:

Zunächst wurden 20 g (6a) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB9:

Zunächst wurden 20 g (7a) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB10:

Zunächst wurden 20 g (8a) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB11:

Zunächst wurden 20 g (9a) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB12:

Zunächst wurden 20 g (10a) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB13:

Zunächst wurden 20 g (14a) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

EB14: Zunächst wurden 20 g (11a) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in 5 einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

EB15: Zunächst wurden 20 g (2c) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

EB16: Zunächst wurden 20 g (4c) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

EB17: Zunächst wurden 20 g (8b) in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### Durchführung der Brandprüfungen

### Screeningtest:

Ein 5 cm x 10 cm x 1 cm Streifen des Schaumkörpers wird für wenige Sekunden in eine 2 cm hohe Propangasflamme mit einer Energie von ca. 50 kW gehalten. Sobald sich die Probe entzündet, jedoch maximal nach 5 s, wird diese aus der Flamme gezogen und die Entzündbarkeit sowie Selbstverlöschung der Probe protokolliert.

Unter Flammhemmend ist zu verstehen, dass nach einer initialen Entzündung die Copolymerkörper oder Formmassen im Vergleich zu Homopolystyrol kürzere Nachbrennzeiten aufweisen.

Unter Selbstverlöschung wird im Screeningtest das folgende Verhalten verstanden: Der durch die Flamme des Brenners entzündete Probenkörper aus Copolymeren oder Formmassen bestehend erlischt innerhalb von 5 s nachdem die Brennerflamme vom Probekörper entfernt wurde.

### Brandprüfung nach DIN 4102-2 (B2):

Eine 20 cm x 10 cm x 1 cm Probe wird mit einem Brenner mit einer Energie von ca. 50 kW, der eine Flammenhöhe von 2 cm aufweist, mit einem senkrechten Abstand von 1 cm zur Unterseite der Probe für 15 s beflammt. Die Nachbrennzeit, Flammenhöhe sowie Selbstverlöschung und brennendes Abtropfverhalten der Probe werden notiert.

### Elementaranalyse (EA):

Die Messung der elementaren Zusammensetzung der Copolymere wurde mit einem vario MICRO cube (Elementar Analysesysteme GmbH, Langenselbold) gemessen. Die Kalibrierung der Messmethode wurde mit Sulfanilamid durchgeführt.

### Gelpermeationschromatographie (GPC):

Die Messung des Molekulargewichtes und der Molekulargewichtsverteilung der Proben wurden mit einem GPC-Analysesystem von Shimadzu (Kyoto, Japan) bestehend aus einem Degasser (DGU-20A_{3R}), zwei Pumpen (LC-20AD), einem Autosampler (SIL-20A_{HT}), einem Säulenofen (CTO-20A, 30°C), einem Diodenarraydetektor (SPD-M20A, 30°C), einem Brechungsindexdetektor (RID-20A, 30°C), einer Steuerungseinheit (CBM-20A) und einem Säulenset (PSS Polymer Standard Services GmbH, Mainz - eine Vorsäule SDV 50x8 mm, 5 µm, zwei Trennsäulen SDV 300x8 mm, 5 µm, 1000 Å, eine Trennsäule SDV 300x8 mm, 5 µm, 100.000 Å), gemessen. Die Kalibrierung wurde mit Polystyrol-Standards durchgeführt.

### Schmelzeviskosität:

Die Messung der Schmelzeviskosität wurde mit dem MeltFloW basic plus (Karg Industrietechnik, Krailing) nach ISO 1133 durchgeführt.

### Schaumqualität:

Bei der Beurteilung der Schaumqualität wurden verschiedene Aspekte berücksichtigt:
(a) Zelligkeit der Polymerschäume (Größe und Gleichmäßigkeit der Zellen). Hierbei wurden die Schaumkörper auf folgende Kriterien geprüft und klassifiziert:

| | |
|---|---|
| -- | Große Zellen (> 5 mm) stark unregelmäßig; |
| - | Große Zellen (> 5 mm) unregelmäßig; |
| 0 | Mittelgroße Zellen (5 mm - 1 mm) unregelmäßig; |
| + | Kleine Zellen (< 1 mm) unregelmäßig; |
| ++ | kleine Zellen (< 1 mm) regelmäßig. |

(b) Phasenseparation & Bildung von Agglomeraten. Hierbei wurden die Schaumkörper auf folgende Kriterien geprüft und klassifiziert:

| | |
|---|---|
| 0 | >10 Agglomerate und Phasenseparationen pro Schaumkörper; |
| + | >0 - <10 Agglomerate und Phasenseparationen pro Schaumkörper; |
| ++ | Keine Agglomerate und Phasenseparationen pro Schaumkörper. |

"Die Beurteilung der Qualität der Schaumkörper, die elementare Zusammensetzung, die Molekulargewichte und -verteilungen sowie die thermischen Kenndaten der synthetisierten Copolymere sind in den nachfolgenden Tabellen 1, 2 und 3 dargestellt. Die Brandprüfergebnisse nach DIN 4102-2 (B2) sind in den Tabelle 4 (Screeningtest) und 5 (Kleinbrennerprüfung) zusammengestellt.

**Tabelle 1:**

| Beurteilung Qualität Schaumkörper | | |
|---|---|---|
| Probe | (a) Zelligkeit | (b) Phasenseparation & Agglomerate |
| (6a) | ++ | ++ |
| (7a) | ++ | ++ |
| (8a) | ++ | ++ |
| (9a) | ++ | + |
| (10a) | ++ | + |
| (14a) | ++ | ++ |

**Tabelle 2:**

| Elementare Zusammensetzung der synthetisierten Copolymere: | | | | |
|---|---|---|---|---|
| Probe | C (%)¹ | H (%)¹ | S (%)¹ | N (%)¹ |
| (6a) | 90,9 | 8,40 | 0,20 | 0,00 |

| | | | | |
|---|---|---|---|---|
| ¹ prozentuale elementare Zusammensetzung mittels Elementaranalyse bestimmt, | | | | |

**Tabelle 3:**

| Molekulargewichte und -verteilungen, thermische Kenndaten und Viskosität der Copolymere: | | | | | |
|---|---|---|---|---|---|
| Probe | Mn¹ (kDa) | Mw¹ (kDa) | *Ð*¹ | Td_{5%}² (°C) | Tg³ (°C) |
| (6a) | 32 | 62 | 1,94 | 405 | 90 |
| (7a) | 10 | 46 | 4,60 | 325 | 96,7 |
| (8a) | 11,8 | 46 | 3,90 | 325 | 94,2 |
| (9a) | 13,3 | 40 | 3,08 | 290 | 83,4 |
| (10a) | 12,1 | 51 | 4,21 | 325 | 93,5 |

| | | | | | |
|---|---|---|---|---|---|
| ¹ mittlere Molekulargewichte und deren Molekulargewichtsverteilung mittels GPC bestimmt, ² Zersetzungstemperatur bei 5% Masseverlust mittels TGA bestimmt, ³ Onset der Glasübergangstemperatur mittels DSC bestimmt. | | | | | |

**Tabelle 4:**

| Brandprüfergebnisse:Screeningtest nach DIN 4102-2 (B2): | | | | |
|---|---|---|---|---|
| Beispiel | Zusammensetzung | Anteil (Co)Polymer (phr¹) | Anteil P1 bzw. P2 (phr¹) | Selbstverlöschend (ja/nein) |
| VB1 | PS | 100 | - | nein |
| VB2 | PS + P1 | 100 | 2,50 | nein |
| VB3 | PS + P2 | 100 | 4,75 | nein |
| EB8 | (6a) | 100 | - | ja |
| EB9 | (7a) | 100 | - | ja |
| EB10 | (8a) | 100 | - | ja |
| EB11 | (9a) | 100 | - | ja |
| EB12 | (10a) | 100 | - | ja |
| EB13 | (14a) | 100 | - | ja |
| EB14 | (11a) | 100 | - | ja |

| | | | | |
|---|---|---|---|---|
| ¹ parts per hundred rubber | | | | |

**Tabelle 5:**

| Kleinbrennerprüfung nach DIN 4102-2 (B2): | | | | | |
|---|---|---|---|---|---|
| Beispiel | Zusammensetzung | Anteil (Co)Polymer (phr¹) | Anteil P1 bzw. P2 (phr¹) | Flammenhöhe (cm) | Nachbrennzeit (s) |
| VB1 | PS | 100 | - | > 15 | 31 |
| VB2 | PS + P1 | 100 | 2,50 | > 15 | 35 |
| VB3 | PS + P2 | 100 | 4,75 | > 15 | 22 |
| EB8 | (6a) | 100 | - | 11 | 13 |
| EB10 | (8a) | 100 | - | 8 | 5 |
| EB17 | (8b) | 100 | - | 9 | 3 |
| EB12 | (10a) | 100 | - | 6 | 0 |

| | | | | | |
|---|---|---|---|---|---|
| ¹ parts per hundred rubber | | | | | |

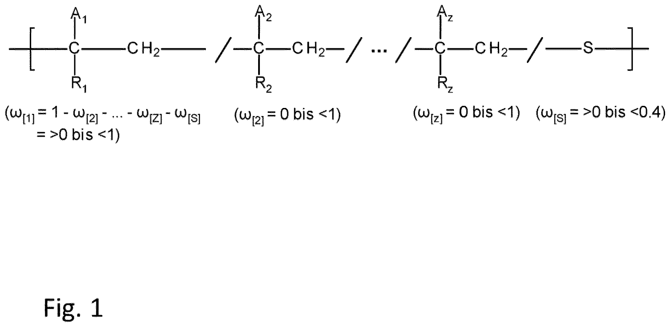

## Patentansprüche

1. Brandhinderndes Copolymer, mit einer statistischen Monomerverteilung von Monomereinheiten mit dem Massenanteil ω mit ω(Sty), ω(P) und ω(S) bei denen ω(S) und ω(P) dem Massenanteil der schwefelhaltigen und phosphorhaltigen Repetiereinheit entsprechen und die Summe der Massenanteile ω(Sty), ω(P) und ω(S) = 1 ist, ausgewählt aus der Gruppe der Formeln (6) bis (15) und (17) bis (24), umfassend 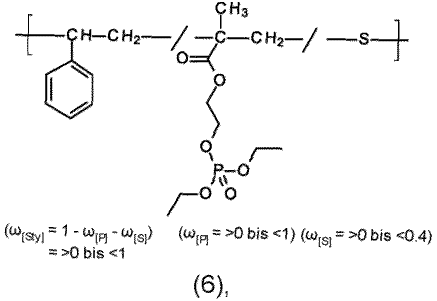 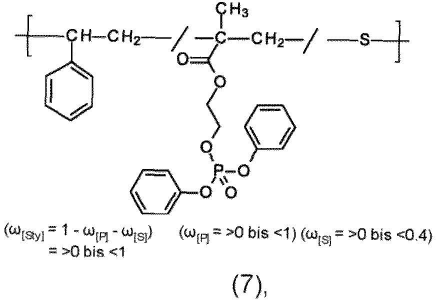 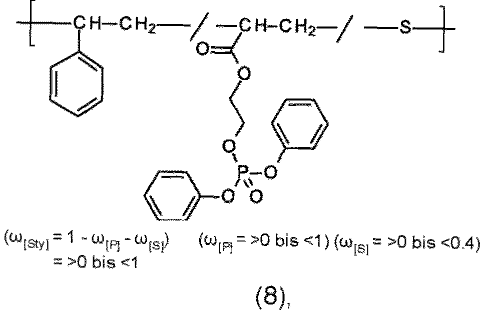 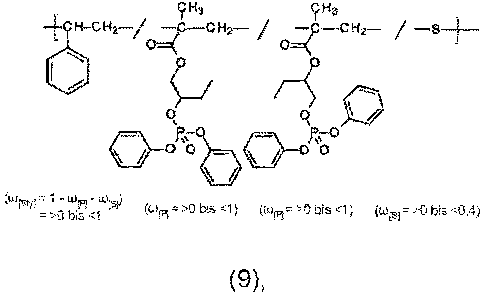 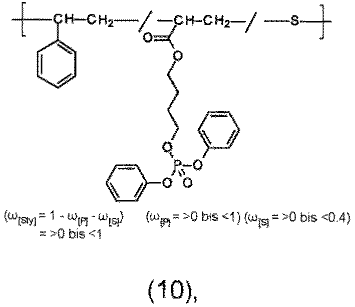 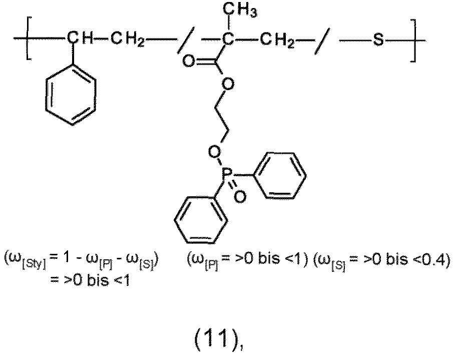 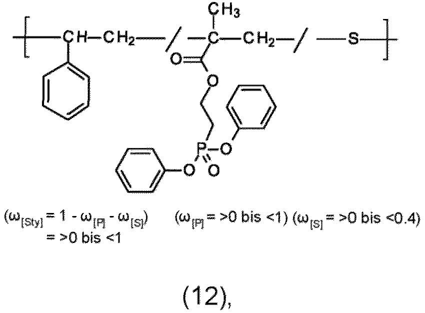 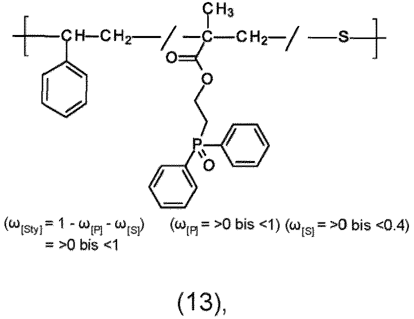 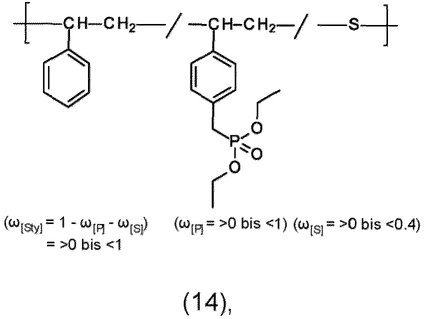 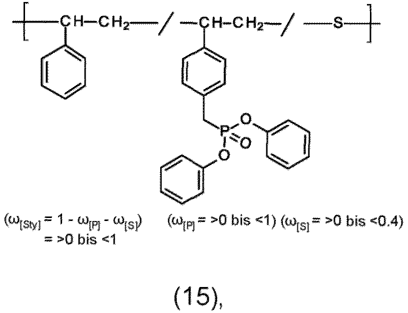 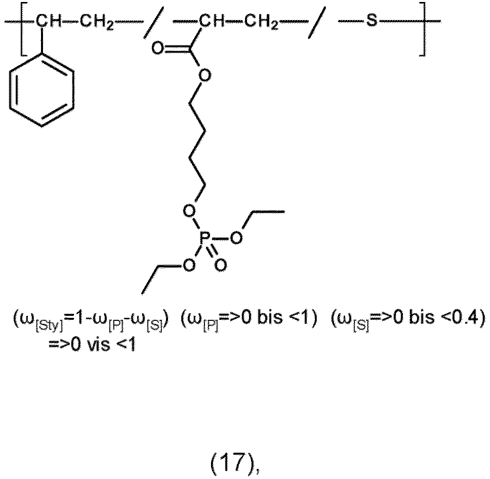 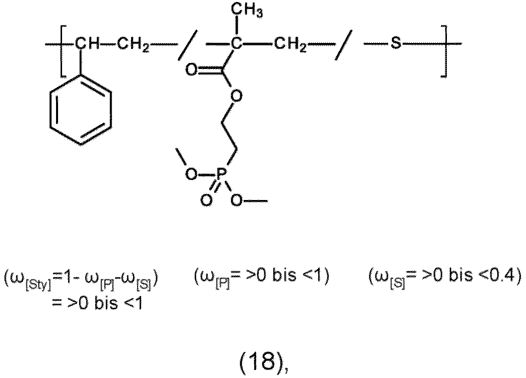 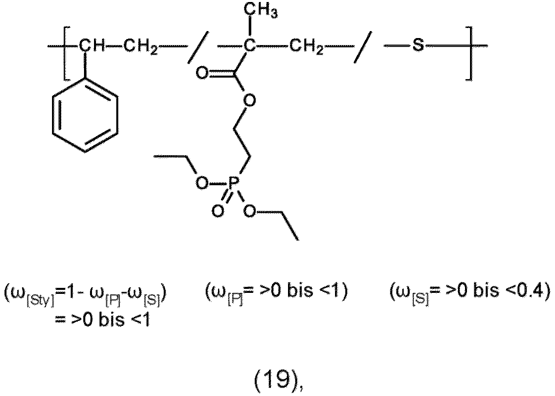 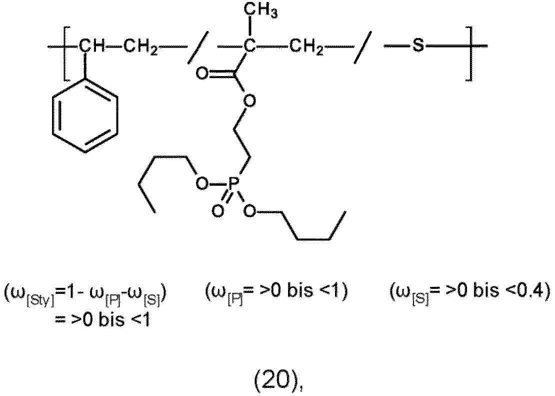 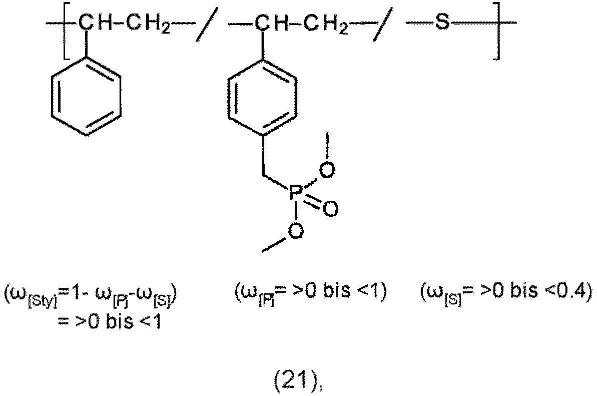 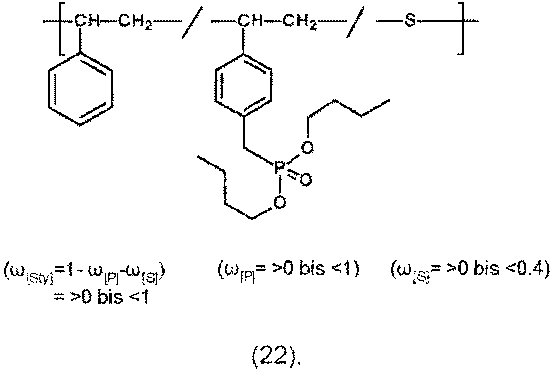 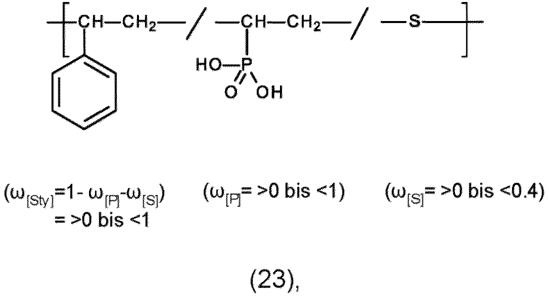 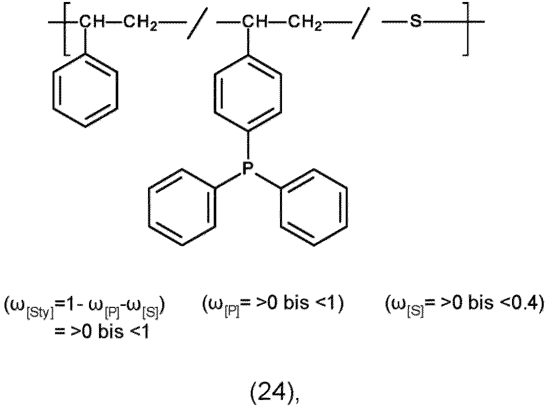 wobei das Copolymer kovalent gebundene Phosphorverbindungen enthält und der Schwefelgehalt < 40% innerhalb des brandhindernden Copolymers beträgt.

2. Brandhinderndes Copolymer nach Anspruch 1,
**dadurch gekennzeichnet, dass** das Copolymer farb- und/oder geruchlos ist, wobei sich die Farblosigkeit mit einem Vergleich zu den Farben nach RAL 1013 Perlweiß, RAL 9001 Cremeweiß, RAL 9003 Signalweiß, RAL 9010 Reinweiß und/oder RAL 9016 Verkehrsweiß bestimmt und/oder die Geruchslosigkeit in der Wahrnehmungsgrenze von sulfidischen Verbindungen im Bereich von weniger als 50 µg/m³ Luft liegt.

3. Brandhinderndes Copolymer nach einem der Ansprüche 1 oder 2,
**dadurch gekennzeichnet, dass** das Copolymer nach einer initialen Entzündung im Vergleich zu Homopolystyrol kürzere Nachbrennzeiten aufweist oder innerhalb von 5s nach der Entzündung erlischt.

4. Brandhinderndes Copolymer nach einem der Ansprüche 1 bis 3,
das weitere phosphorhaltige Zuschläge enthält.

5. Brandhindernder Formstoff, umfassend zumindest ein brandhinderndes Copolymer, mit einer statistischen Monomerverteilung von Monomereinheiten mit dem Massenanteil ω mit ω(Sty), ω(P) und ω(S) bei denen ω(S) und ω(P) dem Massenanteil der schwefelhaltigen und phosphorhaltigen Repetiereinheit entsprechen und die Summe der Massenanteile ω(Sty), ω(P) und ω(S) = 1 ist, ausgewählt aus der Gruppe von Verbindungen der Formeln (6) bis (15) und (17) bis (24), umfassend 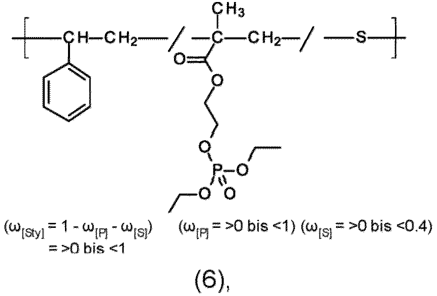 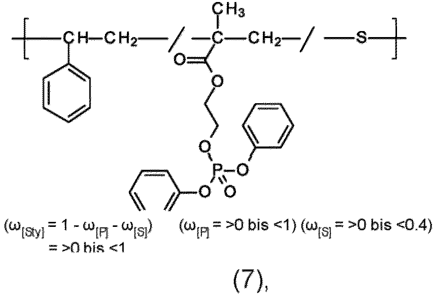 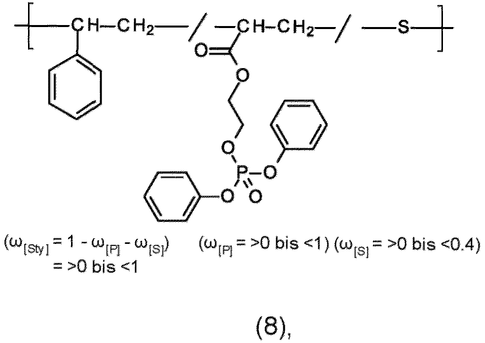 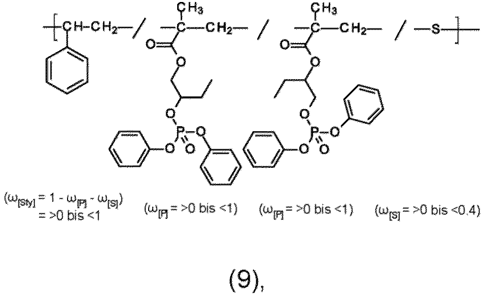 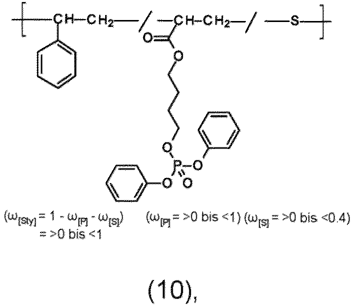 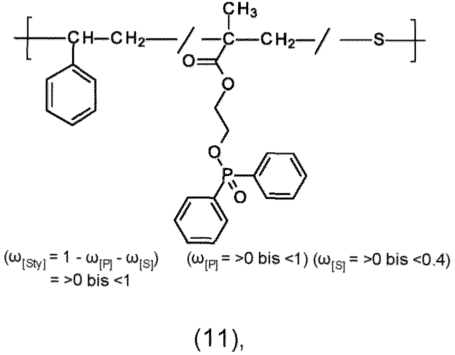 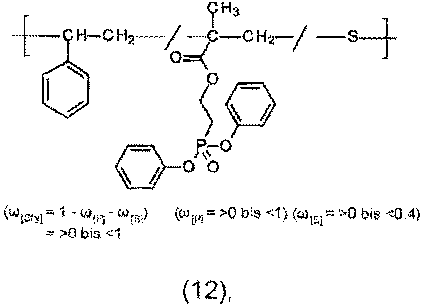 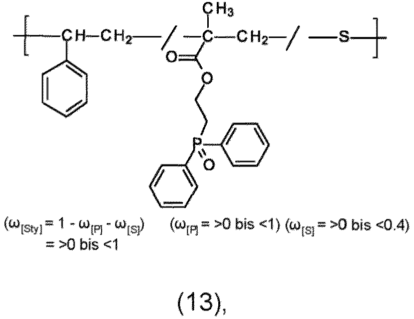 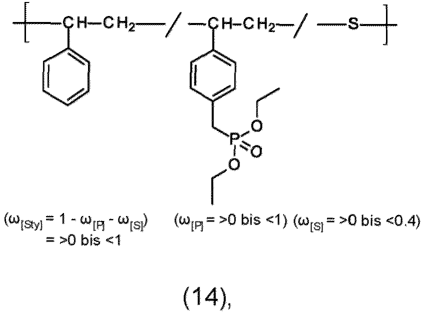 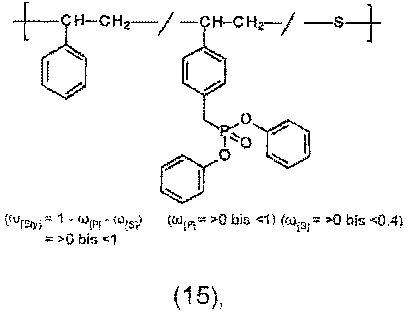 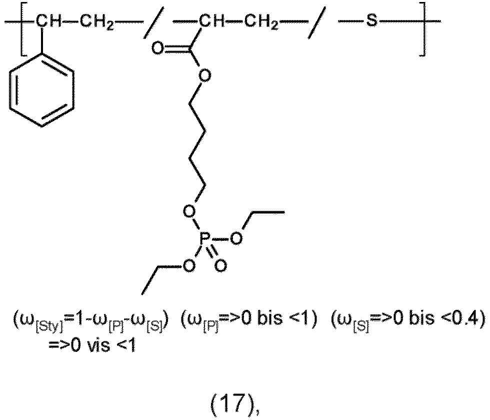 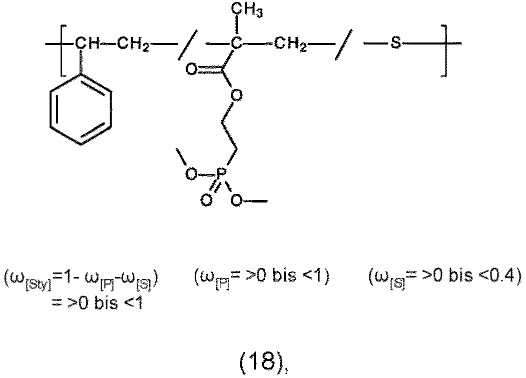 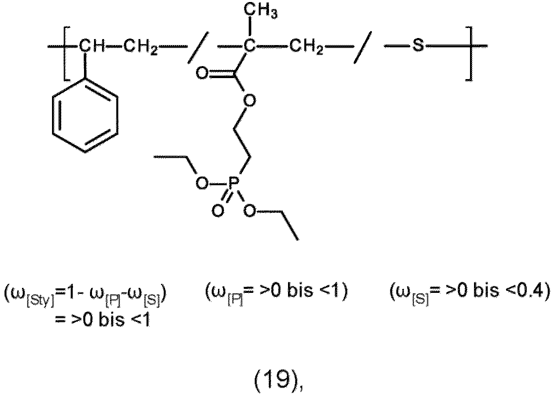 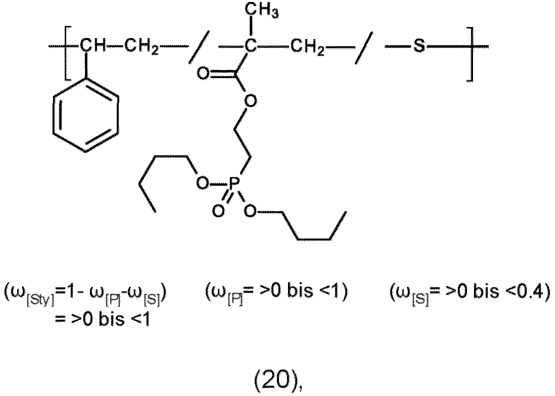 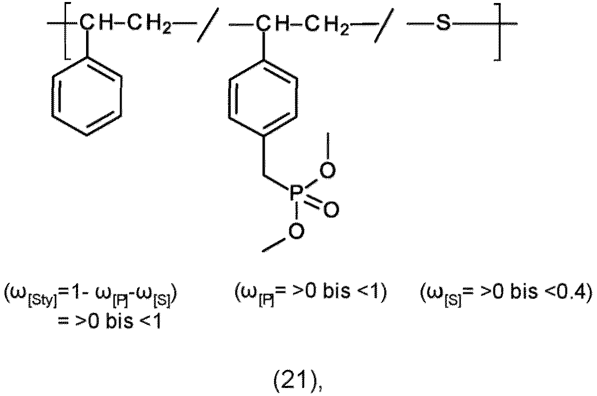 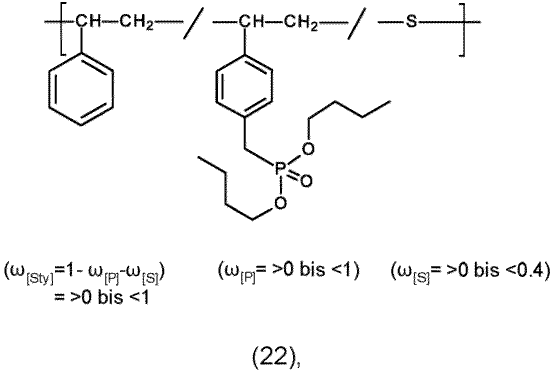 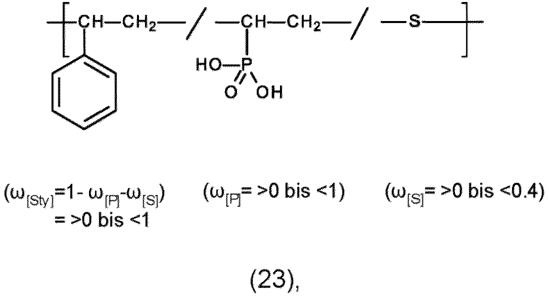 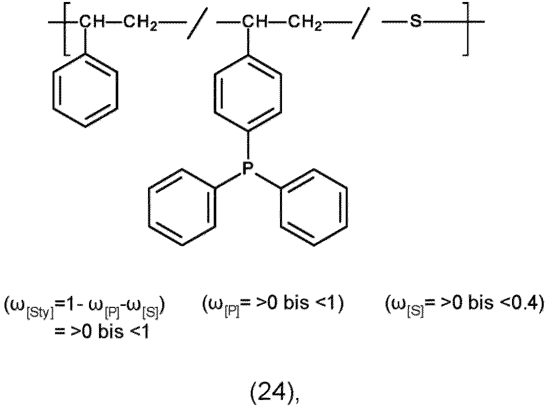 wobei das brandhindernde Copolymer kovalent gebundene Phosphorverbindungen umfasst und einen Schwefeanteil < 40% innerhalb des brandhindernden Copolymers aufweist und der brandhindernde Formstoff zumindest ein weiteres Polymer und/oder zumindest ein zusätzliches Copolymer ausgewählt aus der Gruppe der Formeln (6) bis (15) und (17) bis (24). und/oder einen Werkstoff beinhaltet.

6. Brandhindernder Formstoff nach Anspruch 5, wobei der brandhindernde Formstoff einen Werkstoff aus Metall oder Kunststoff oder Prepregs oder Keramik umfasst.

7. Brandhindernder Formstoff nach Anspruch 5 oder 6, wobei der Copolymeranteil mehr als 10 Gew.% des Formstoffs beträgt.

8. Brandhindernder Formstoff nach einem der Ansprüche 5 bis 7, wobei der Formstoff als weiteres Polymer homopolymere Polystyrole (PS) oder expandierbare Styrolpolymere (EPS) oder Extrusionsschaumstoffplatten (XPS) umfasst.

9. Brandhindernder Formstoff nach einem der Ansprüche 5 bis 8, wobei der Formstoff nach einer initialen Entzündung im Vergleich zu Homopolystyrol kürzere Nachbrennzeiten aufweist und insofern flammhemmend ist oder der Formstoff innerhalb von 5s nach der Entzündung erlischt und damit selbstverlöschend ist.

10. Brandhindernder Formstoff nach einem der Ansprüche 5 bis 9, wobei der Formstoff farb- und/oder geruchlos ist und sich die Farblosigkeit mit einem Vergleich zu den Farben nach RAL 1013 Perlweiß, RAL 9001 Cremeweiß, RAL 9003 Signalweiß, RAL 9010 Reinweiß und/oder RAL 9016 Verkehrsweiß bestimmt und/oder die Geruchslosigkeit in der Wahrnehmungsgrenze von sulfidischen Verbindungen im Bereich von weniger als 50 µg/m³ Luft liegt.

11. Brandhindernder Formstoff nach einem der Ansprüche 5 bis 10, wobei die Formmasse als Werkstoff mindestens einen IR-Absorber, insbesondere Graphit, Ruß oder Aluminium mit einer mittleren Teilchengröße im Bereich von 1 bis 50 µm enthält.

12. Verfahren zur Herstellung von brandhindernden Formstoffen nach einem der Ansprüche 5 bis 11 umfassend die Schritte
a. Einmischen eines organischen Treibmittels in eine Polymerschmelze umfassend mindestens ein brandhinderndes Copolymer mit oder ohne weitere phosphorhaltige Zuschläge mittels statischer und/oder dynamischer Mischer bei einer Temperatur von mindestens 150 °C,
b. Kühlen der treibmittelhaltigen Polymerschmelze auf eine Temperatur von mindestens 120°C,
c. Austrag durch eine Düsenplatte mit Bohrungen, deren Durchmesser am Düsenaustritt höchstens 1,5 mm beträgt und
d. Granulieren der treibmittelhaltigen Schmelze direkt hinter der Düsenplatte unter Wasser bei einem Druck im Bereich von 1 bis 20 bar.

13. Verfahren zur Herstellung von brandhindernden Formstoffen nach einem der Ansprüche 5 bis 11, umfassend die Schritte:
a. Polymerisation,
b. Zugabe eines organischen Treibmittels vor, während und/oder nach der Polymerisation und
c. Abtrennen der expandierbaren, treibmittelhaltigen Copolymere durch Sieben.

14. Verfahren zur Herstellung von brandhindernden Copolymeren oder Formstoffen nach Anspruch 13, wobei die Formstoffe mittels einer Suspensionspolymerisation erhalten werden.

15. Verwendung von brandhindernden Copolymeren oder Formstoffen nach einem der Ansprüche 1 bis 11 als Einzel- oder Co-Bestandteil von Dämm- oder Isoliermaterial für Gebäude oder als Bauteil und Komponente im Elektro- und Elektronikbereich.

## Claims

1. A fire-retardant copolymer having a statistical monomer distribution of monomer units having the compositions (mass fractions) ω with ω(Sty), ω(P) and ω(S), wherein ω(S) and ω(P) represent a mass fraction of the sulfurous and phosphorous repeating units and the sum of the mass fractions ω(Sty), ω(P) and ω(S) is equal to 1, selected from the group of formulas (6) to (15) and (17) to (24), comprising 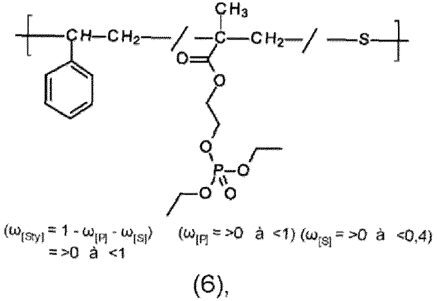 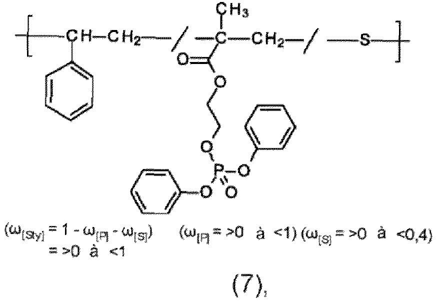 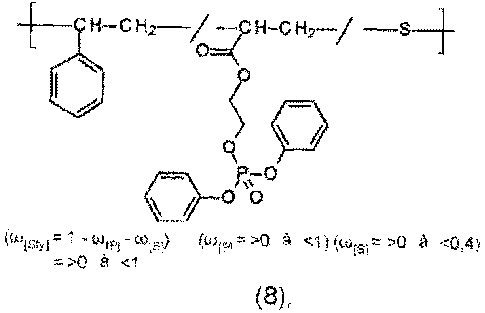 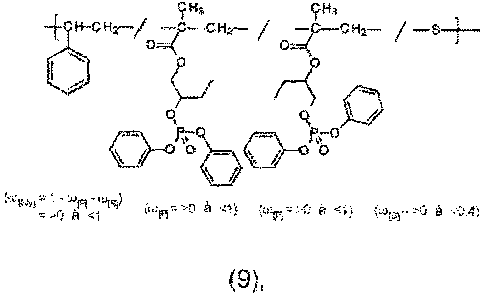 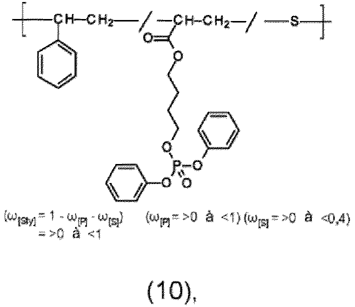 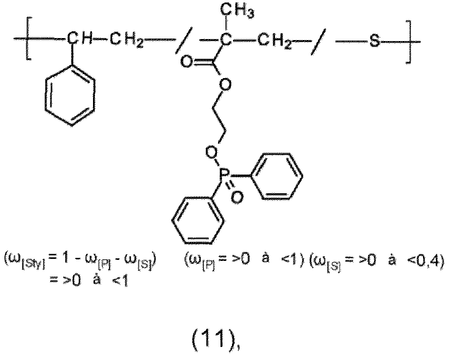 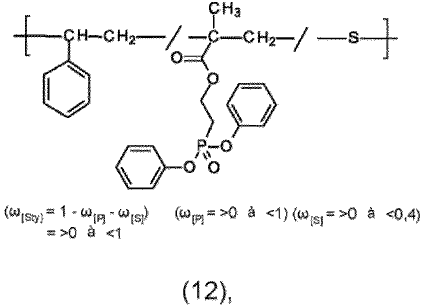 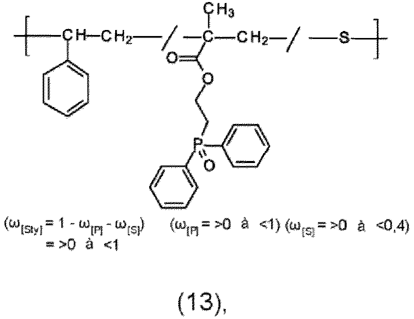 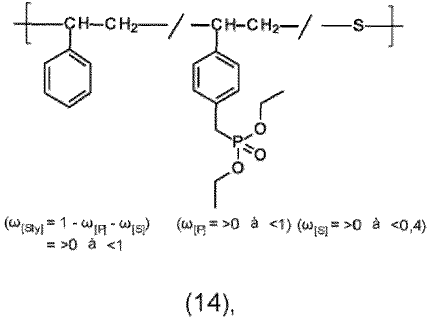 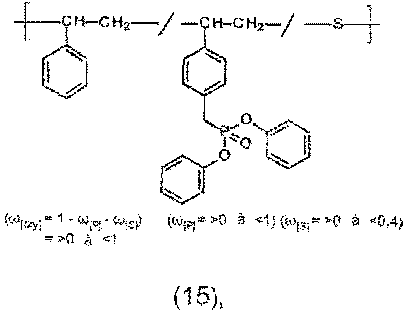 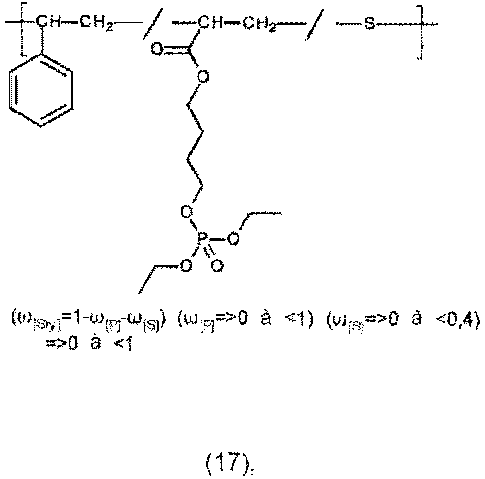 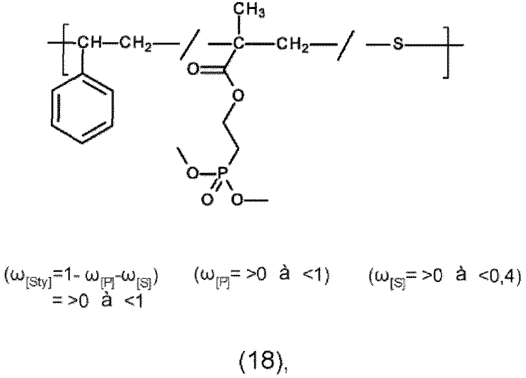 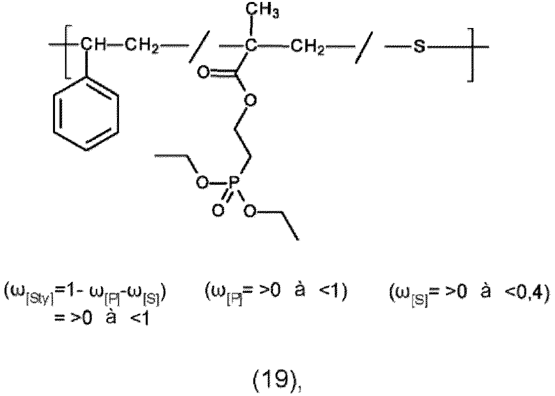 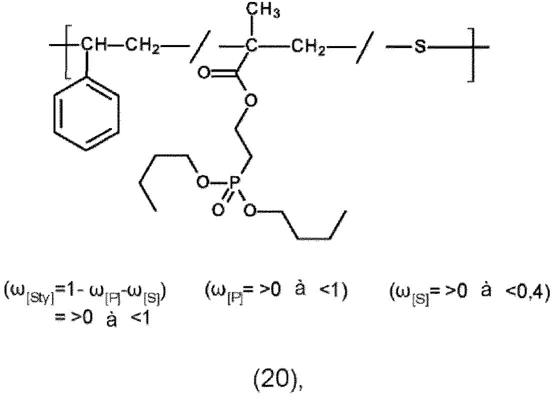 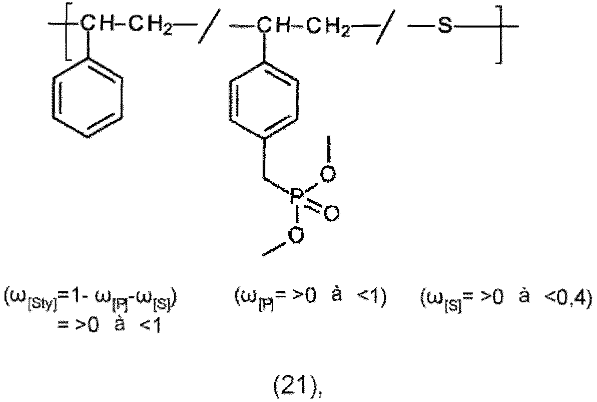 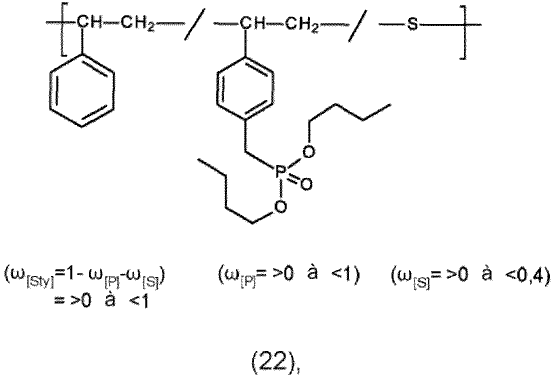 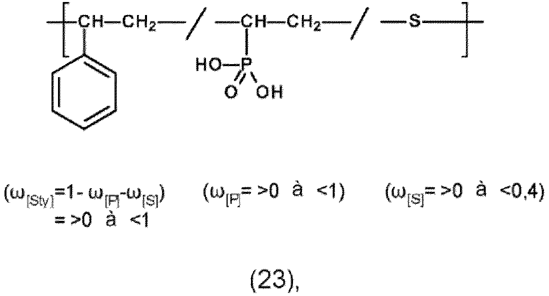 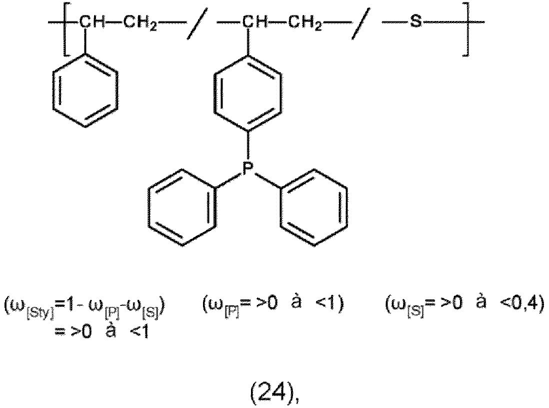 wherein the copolymer comprises covalently bonded phosphorus compounds and has a sulfur content of less than 40% within the fire-retardant copolymer.

2. The fire-retardant copolymer according to claim 1,
**characterized in that** the copolymer is colorless and/or odorless, wherein the colorlessness is determined by comparing the colors according to RAL 1013 Oyster white, RAL 9001 Cream, RAL 9003 Signal white, RAL 9010 Pure white and/or RAL 9016 Traffic white and/or the odorlessness is within the detection limit of sulfide compounds within the range of less than 50 µg/m³ of air.

3. The fire-retardant copolymer according to any of claims 1 or 2,
**characterized in that** the copolymer has shorter afterburn times after initial ignition compared to homopolystyrene or is extinguished within 5s after ignition.

4. The fire-retardant copolymer according to any of claims 1 to 3,
further containing additional phosphorus-containing additives.

5. A fire-retardant molding material comprising at least one fire-retardant copolymer, having a statistical monomer distribution of monomer units having the compositions (mass fractions) ω with ω(Sty), ω(P) and ω(S), wherein ω(S) and ω(P) represent a mass fraction of the sulfurous and phosphorous repeating units and the sum of the mass fractions ω(Sty), ω(P) and ω(S) is equal to 1, selected from a group of compounds of formulas (6) to (15) and (17) to (24), comprising 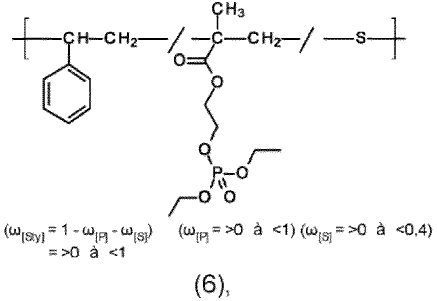 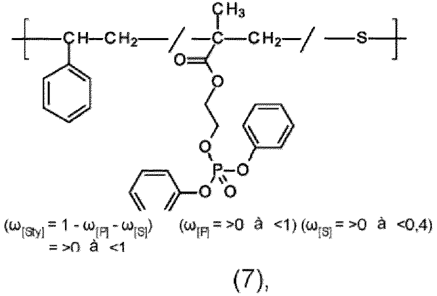 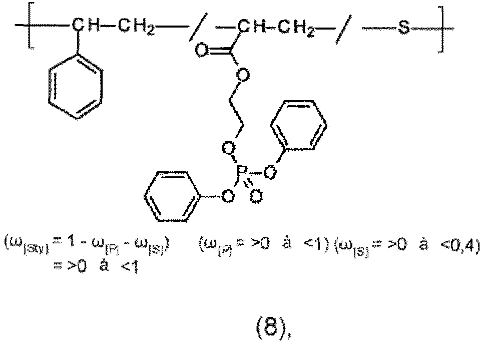 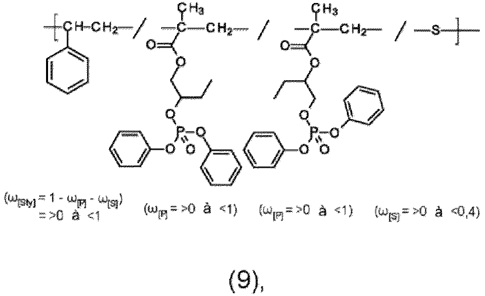 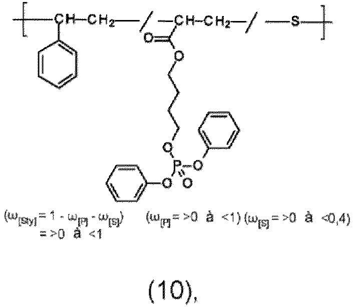 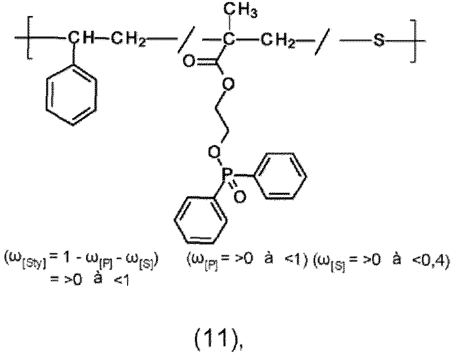 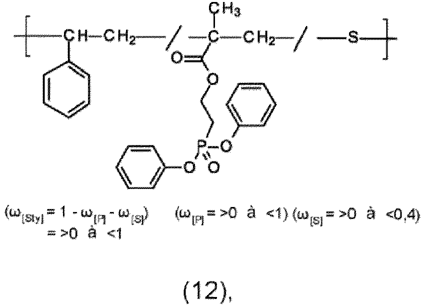 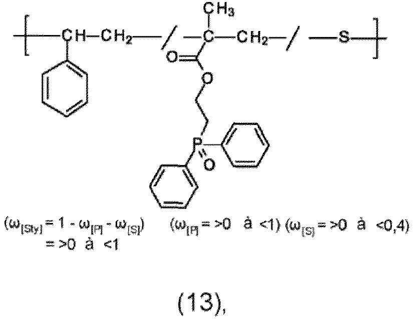 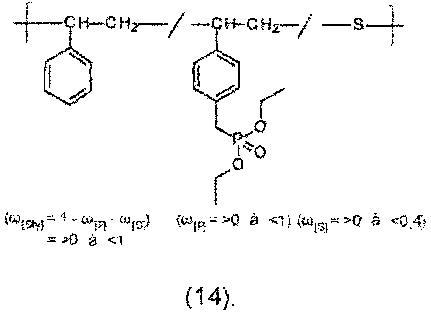 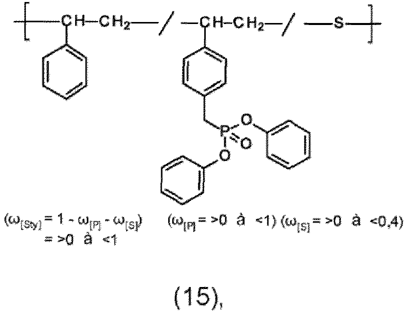 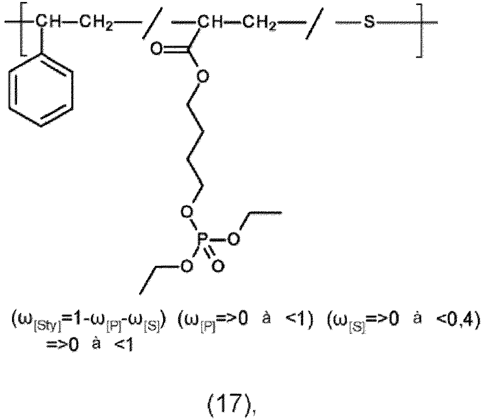 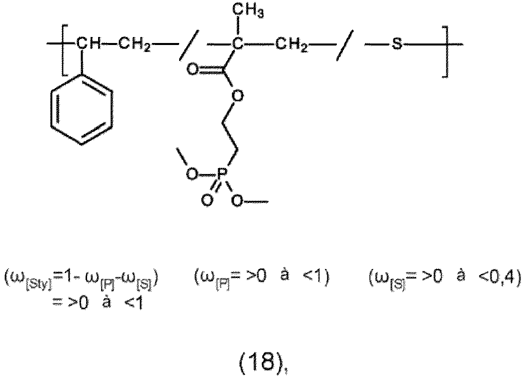 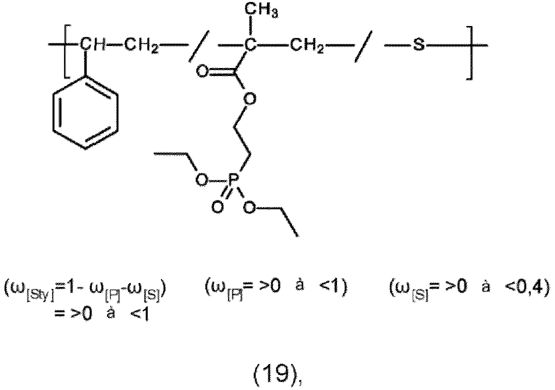 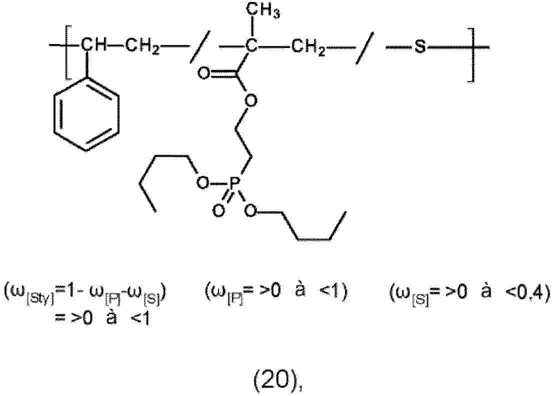 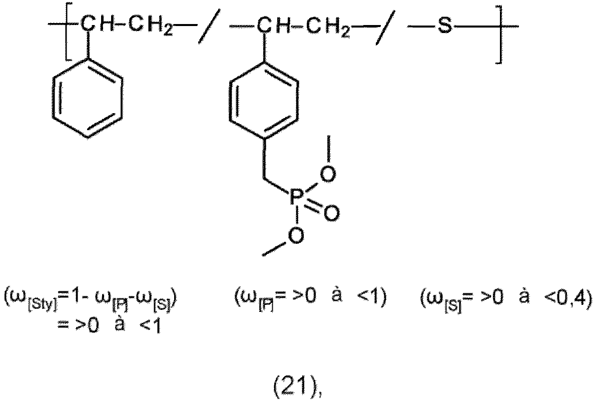 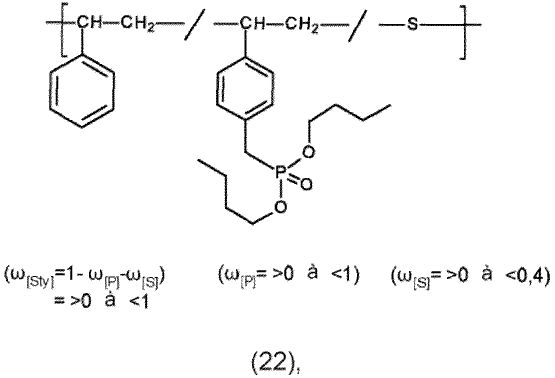 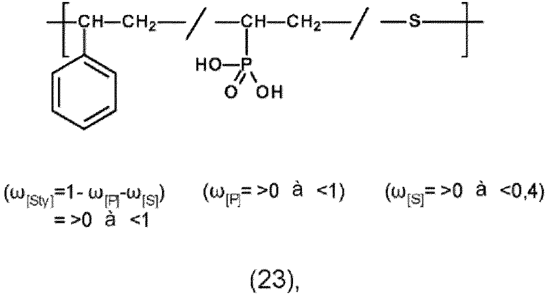 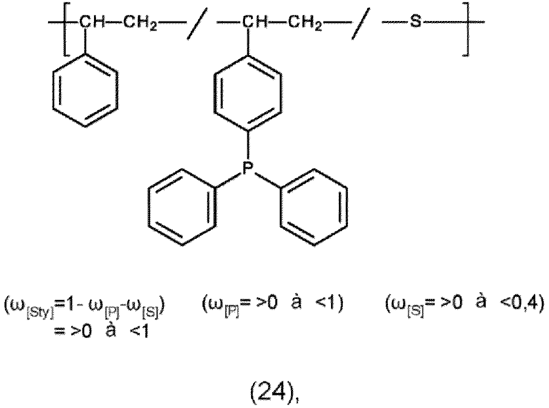 wherein the copolymer comprises covalently bonded phosphorus compounds and has a sulfur content of less than 40% within the fire-retardant copolymer, the fire-retardant molding material comprising at least one further polymer and/or at least one additional copolymer selected from the group of formulas (6) to (15) and (17) to (24) and/or a material in addition to the fire-retardant copolymer.

6. The fire-retardant molding material according to claim 5, wherein the fire-retardant molding material comprises a material made of metal or plastic or prepregs or ceramics.

7. The fire-retardant molding material according to claim 5 or 6, wherein the copolymer content is more than 10% by weight of the molding material.

8. The fire-retardant molding material according to any of claims 5 to 7, wherein the molding material comprises homopolymeric polystyrenes (PS) or expandable styrene polymers (EPS) or extruded foam sheets (XPS) as a further polymer.

9. The fire-retardant molding material according to any of claims 5 to 8, wherein the molding material has shorter afterburn times after initial ignition compared to homopolystyrene and is therefore flame-retardant or the molding material is extinguished within 5s after ignition and is therefore self-extinguishing.

10. The fire-retardant molding material according to any of claims 5 to 9, wherein the molding material is colorless and/or odorless and the colorlessness is determined by comparing the colors according to RAL 1013 Oyster white, RAL 9001 Cream, RAL 9003 Signal white, RAL 9010 Pure white and/or RAL 9016 Traffic white and/or the odorlessness is within the detection limit of sulfide compounds within the range of less than 50 µg/m3 of air.

11. The fire-retardant molding material according to any of claims 5 to 10, wherein the molding compound contains at least one IR absorber, in particular graphite, carbon black or aluminum having an average particle size within the range of 1 to 50 µm.

12. A method for producing fire-retardant molding materials according to any of claims 5 to 11, comprising the steps:
a. mixing an organic blowing agent into a polymer melt comprising at least one fire-retardant copolymer having or not having further phosphorus-containing additives by means of static and/or dynamic mixers at a temperature of at least 150°C,
b. cooling the blowing agent-containing polymer melt to a temperature of at least 120°C,
c. discharging through a nozzle plate having holes whose diameter at the nozzle outlet is at most 1.5 mm and
d. granulating the blowing agent-containing melt directly behind the nozzle plate under water at a pressure within the range of 1 to 20 bar.

13. A method for producing fire-retardant molding materials according to any of claims 5 to 11, comprising the steps:
a. polymerization,
b. adding an organic blowing agent before, during and/or after the polymerization and
c. separating the expandable, blowing agent-containing copolymers by means of sieving.

14. The method for producing the fire-retardant copolymers or molding materials according to claim 13, wherein the molding materials being obtained by means of suspension polymerization.

15. Use of fire-retardant copolymers or molding materials according to any of claims 1 to 11 as an individual or co-component of insulating material for buildings or as a structural part and component in the electrical and electronics sector.

## Revendications

1. Copolymère ignifuge, comportant une distribution de monomères statistique de motifs monomères de fraction massique ω avec ω(Sty), ω(P) et ω(3) où ω(S) et ω(P) correspondent à la fraction massique du motif de répétition contenant du soufre et contenant du phosphore, et la somme des fractions massiques ω(Sty), ω(P) et ω(S) = 1, choisi dans le groupe des formules (6) à (15) et (17) à (24), comprenant 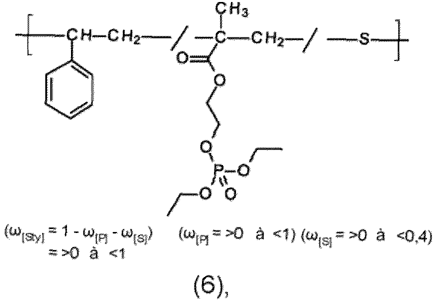 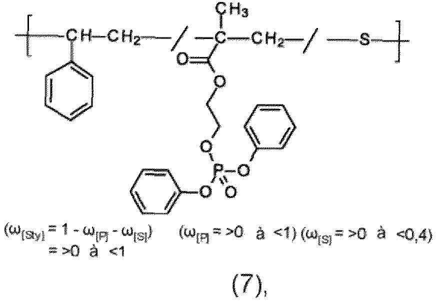 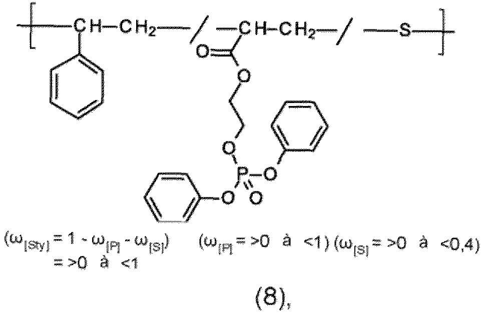 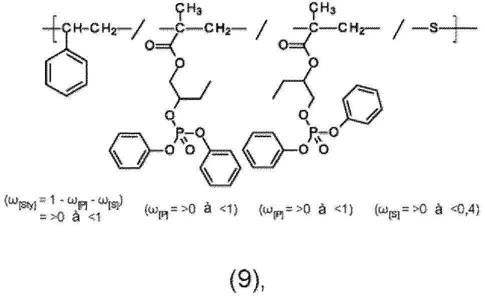 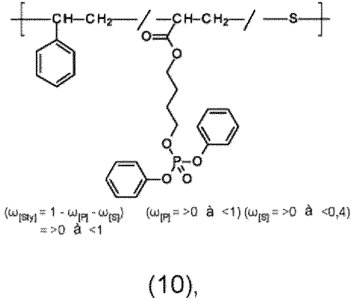 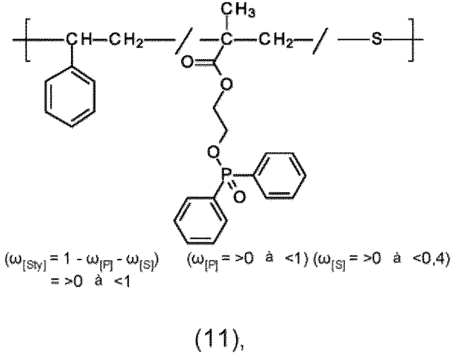 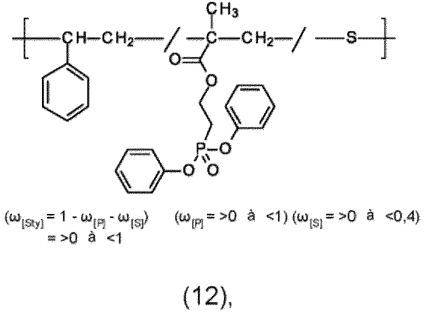 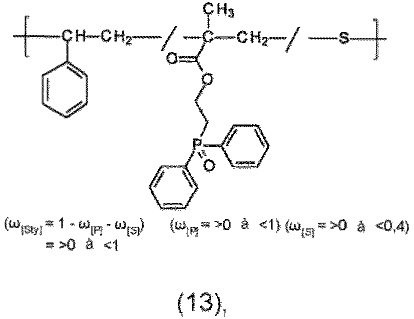 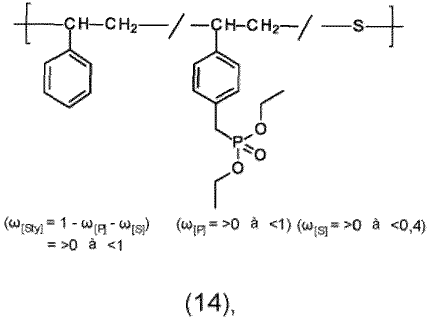 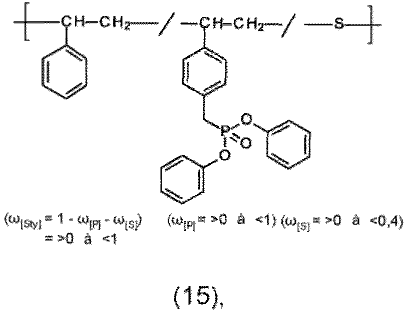 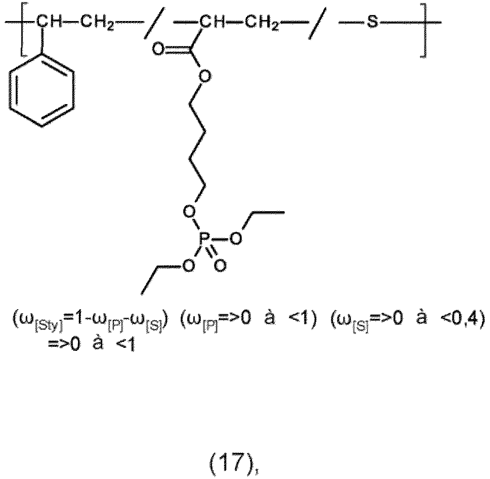 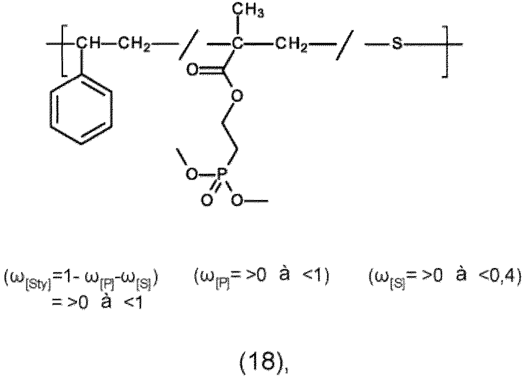 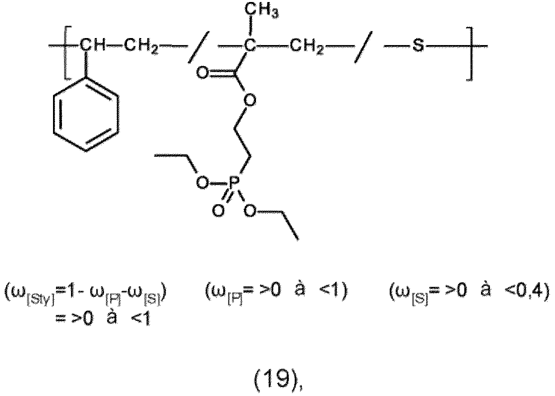 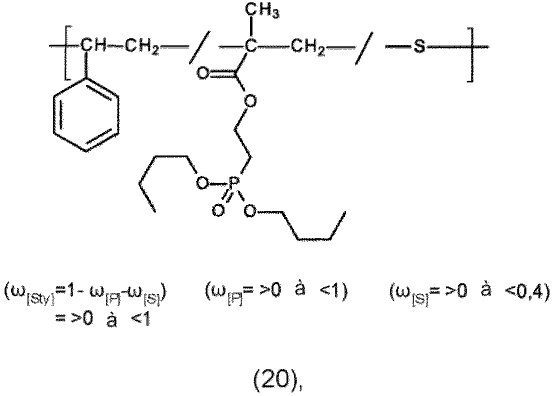 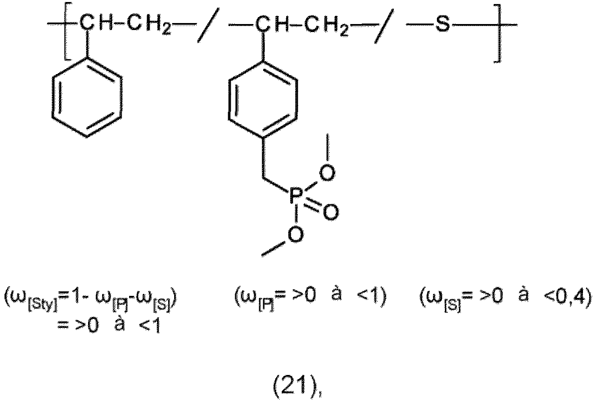 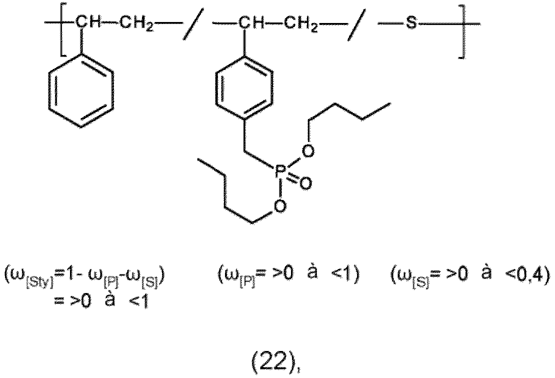 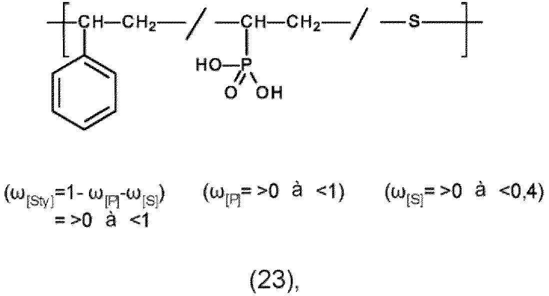 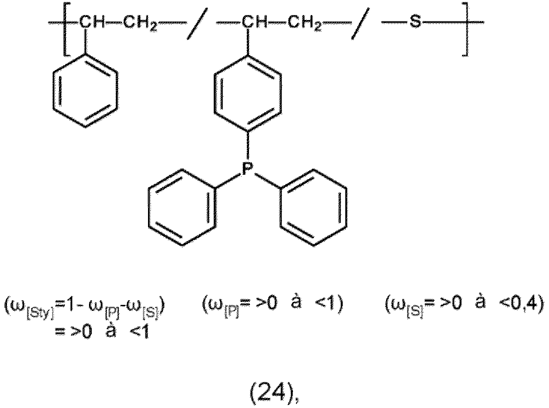 dans lequel le copolymère contient des composés phosphorés liés de manière covalente et la teneur en soufre est < 40 % au sein du copolymère ignifuge.

2. Copolymère ignifuge selon la revendication 1,
**caractérisé en ce que** le copolymère est incolore et/ou inodore, dans lequel l'absence de couleur est déterminée par comparaison avec les couleurs selon RAL 1013 blanc perlé, RAL 9001 blanc crème, RAL 9003 blanc de sécurité, RAL 9010 blanc pur et/ou RAL 9016 blanc signalisation et/ou l'absence d'odeur se situe dans le seuil de perception de composés sulfurés dans la plage de moins de 50 µg/m³ d'air.

3. Copolymère ignifuge selon l'une des revendications 1 ou 2,
**caractérisé en ce que** le copolymère présente, après une inflammation initiale, des temps de post-combustion plus courts par rapport à ceux de l'homopolystyrène ou s'éteint dans les 5 secondes suivant l'inflammation.

4. Copolymère ignifuge selon l'une des revendications 1 à 3, lequel contient d'autres additifs contenant du phosphore.

5. Matière de moulage ignifuge, comprenant au moins un copolymère ignifuge, comportant une distribution de monomères statistique de motifs monomères de fraction massique ω avec ω(Sty), ω(P) et ω(3) où ω(3) et ω(P) correspondent à la fraction massique du motif de répétition contenant du soufre et contenant du phosphore, et la somme des fractions massiques ω(Sty), ω(P) et ω(S) = 1, choisi dans le groupe des composés de formules (6) à (15) et (17) à (24), comprenant 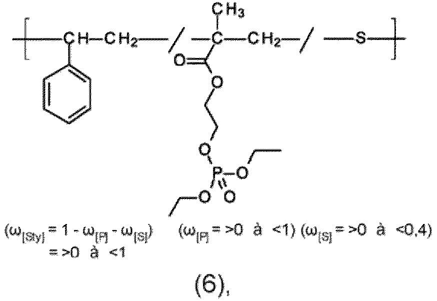 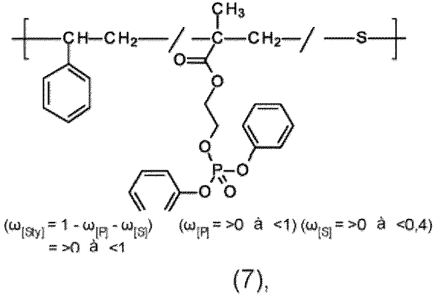 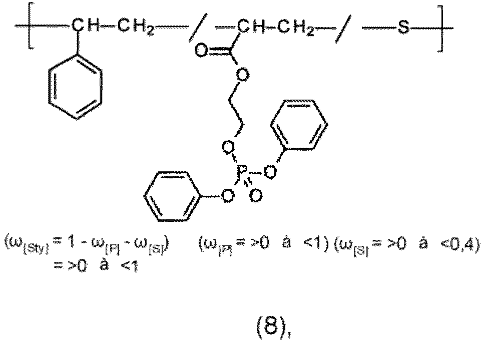 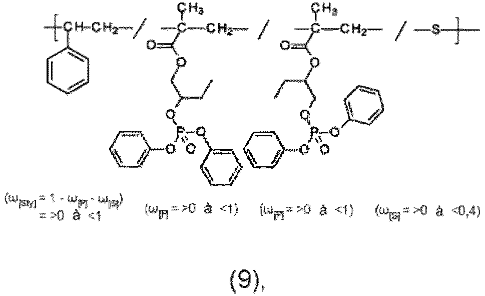 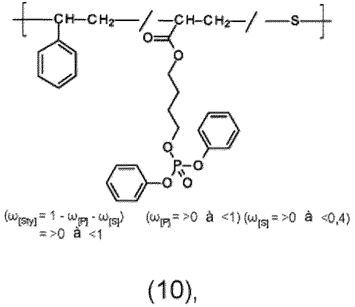 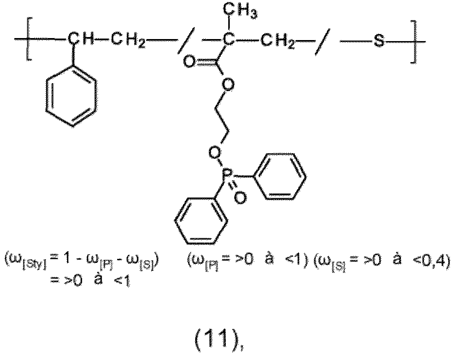 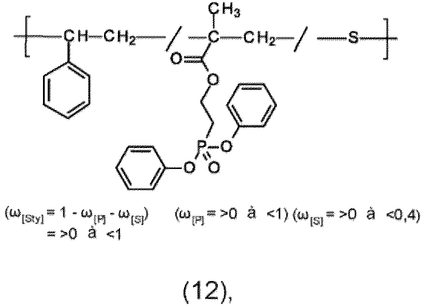 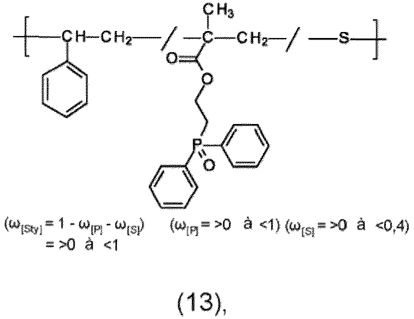 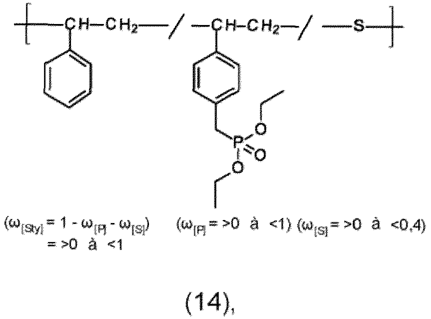 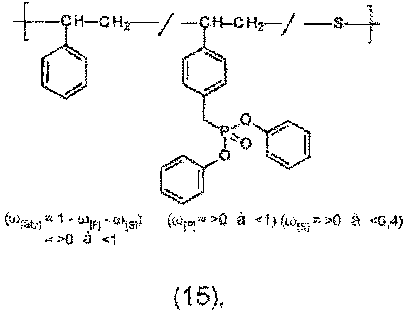 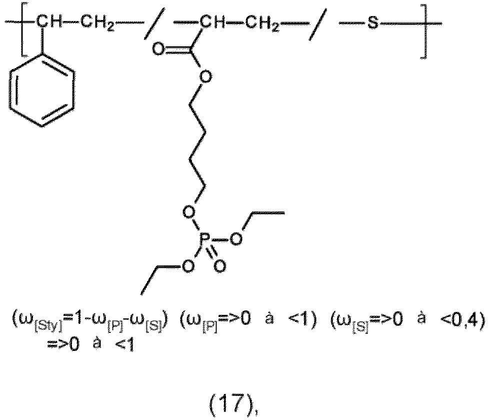 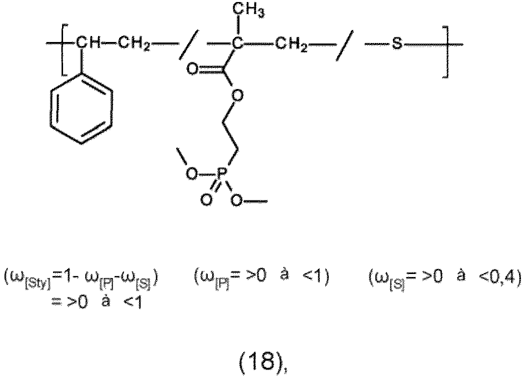 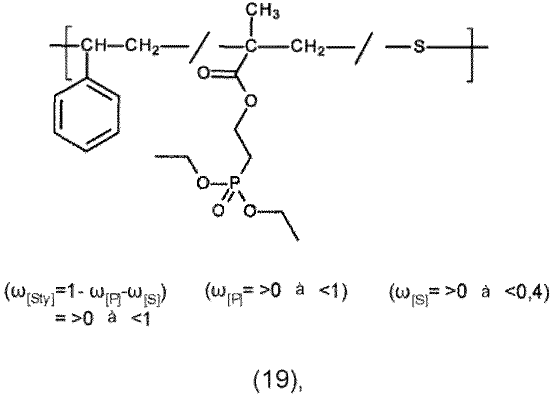 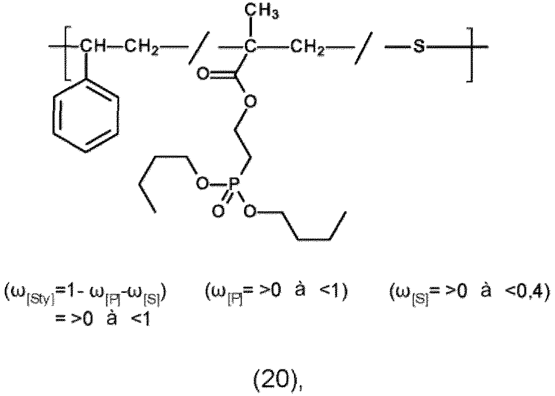 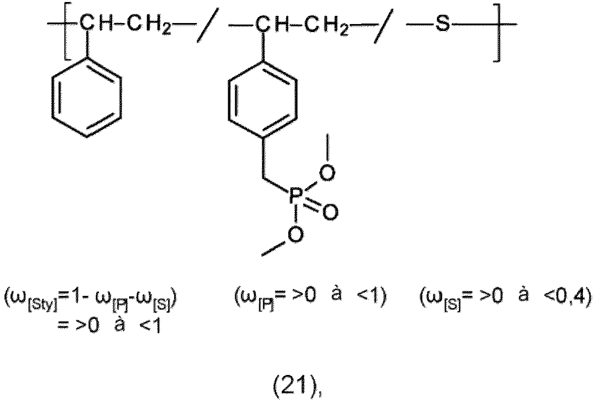 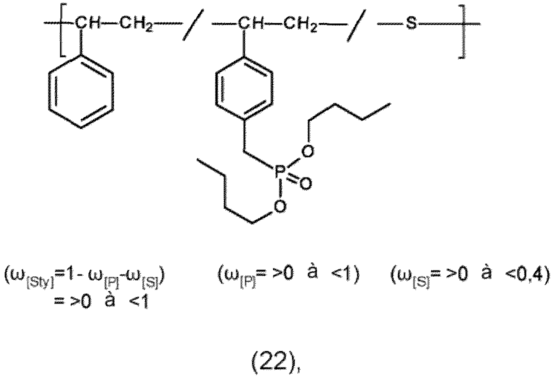 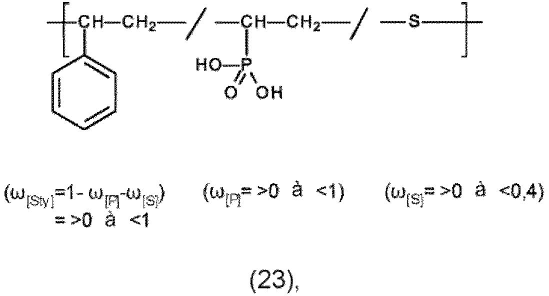 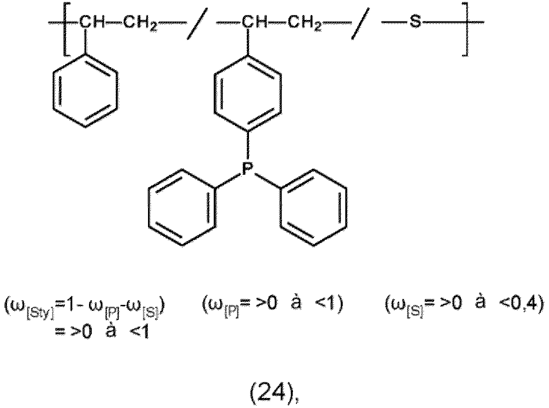 dans laquelle le copolymère ignifuge comprend des composés phosphorés liés de manière covalente et présente une teneur en soufre < 40 % au sein du copolymère ignifuge et la matière de moulage ignifuge contient au moins un autre polymère et/ou au moins un copolymère supplémentaire choisi dans le groupe des formules (6) à (15) et (17) à (24) et/ou un matériau.

6. Matière de moulage ignifuge selon la revendication 5, dans laquelle la matière de moulage ignifuge comprend un matériau en métal ou en plastique ou en préimprégné ou en céramique.

7. Matière de moulage ignifuge selon la revendication 5 ou 6, dans laquelle la fraction de copolymère est supérieure à 10 % en poids de la matière de moulage.

8. Matière de moulage ignifuge selon l'une des revendications 5 à 7, dans laquelle la matière de moulage comprend, en tant qu'autre polymère, des polystyrènes homopolymères (PS) ou des polymères styréniques expansibles (EPS) ou des plaques de mousse d'extrusion (XPS).

9. Matière de moulage ignifuge selon l'une des revendications 5 à 8, dans laquelle la matière de moulage présente, après une inflammation initiale, des temps de post-combustion plus courts par rapport à ceux de l'homopolystyrène et est, dans cette mesure, ignifuge ou la matière de moulage s'éteint dans les 5 secondes suivant l'inflammation et est ainsi autoextinguible.

10. Matière de moulage ignifuge selon l'une des revendications 5 à 9, dans laquelle la matière de moulage est incolore et/ou inodore et l'absence de couleur est déterminée par comparaison avec les couleurs selon RAL 1013 blanc perlé, RAL 9001 blanc crème, RAL 9003 blanc de sécurité, RAL 9010 blanc pur et/ou RAL 9016 blanc signalisation et/ou l'absence d'odeur se situe dans le seuil de perception de composés sulfurés dans la plage de moins de 50 µg/m³ d'air.

11. Matière de moulage ignifuge selon l'une des revendications 5 à 10, dans laquelle la masse de moulage contient comme matériau au moins un absorbeur d'IR, en particulier du graphite, du noir de carbone ou de l'aluminium comportant une taille moyenne des particules dans la plage allant de 1 à 50 µm.

12. Procédé pour la fabrication de matières de moulage ignifuges selon l'une des revendications 5 à 11, comprenant les étapes consistant à
a. mélanger un agent gonflant organique dans une masse fondue de polymères comprenant au moins un copolymère ignifuge, avec ou sans autres additifs contenant du phosphore, au moyen d'un mélangeur statique et/ou dynamique à une température d'au moins 150 °C,
b. refroidir la masse fondue de polymères contenant l'agent gonflant à une température d'au moins 120 °C,
c. évacuer par une plaque à buses comportant des alésages dont le diamètre à la sortie de buse est d'au plus 1,5 mm et
d. granuler la masse fondue contenant l'agent gonflant directement après la plaque à buses sous l'eau à une pression dans la plage allant de 1 à 20 bar.

13. Procédé pour la fabrication de matières de moulage ignifuges selon l'une des revendications 5 à 11, comprenant les étapes consistant à :
a. polymériser,
b. ajouter un agent gonflant organique avant, pendant et/ou après la polymérisation et
c. séparer par tamisage les copolymères expansibles contenant l'agent gonflant.

14. Procédé pour la fabrication de copolymères ou de matières de moulage ignifuges selon la revendication 13, dans lequel les matières de moulage sont obtenues au moyen d'une polymérisation en suspension.

15. Utilisation de copolymères ou de matières de moulage ignifuges selon l'une des revendications 1 à 11 comme partie individuelle ou co-partie de matériaux d'isolation ou de calfeutrage pour des bâtiments ou comme élément et composant dans les domaines électrique et électronique.
